(19) Europäisches Patentamt / European Patent Office / Office européen des brevets

(11) **EP 4 733 917 A1**

(12) **EUROPEAN PATENT APPLICATION**
published in accordance with Art. 153(4) EPC

(43) Date of publication:
**29.04.2026 Bulletin 2026/18**

(21) Application number: **24911214.5**

(22) Date of filing: **25.12.2024**

(51) International Patent Classification (IPC):
***G06F 3/04845*** *(2022.01)*

(52) Cooperative Patent Classification (CPC):
**G06F 3/04845; G06F 3/04883; G06T 11/20**

(86) International application number:
**PCT/CN2024/142232**

(87) International publication number:
**WO 2025/140290 (03.07.2025 Gazette 2025/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.12.2023 CN 202311839884**

(71) Applicant: **Huawei Technologies Co., Ltd.
Shenzhen, Guangdong 518129 (CN)**

(72) Inventors:
- **ZHOU, Peng
  Shenzhen, Guangdong 518129 (CN)**
- **XU, Chao
  Shenzhen, Guangdong 518129 (CN)**
- **YANG, Fei
  Shenzhen, Guangdong 518129 (CN)**

(74) Representative: **Grünecker Patent- und Rechtsanwälte
PartG mbB
Leopoldstraße 4
80802 München (DE)**

(54) **GRAPH DRAWING METHOD AND RELATED APPARATUS**

(57) This application provides a graphics drawing method and a related apparatus. The method may include: An electronic device may construct a primitive SDF, store the primitive SDF in a global acceleration structure, and determine screen visibility and spatial visibility of a pixel on a screen according to a line-of-sight tracking method. In this way, a finally visible primitive in the pixel can be determined. In addition, an animation effect of the primitive may be further calculated through line-of-sight tracking, and a color value of the pixel is finally determined. Finally, the electronic device may invoke a drawcall instruction once based on the foregoing calculation result to draw a first image frame. In this way, a drawing effect of the electronic device may be improved, and power consumption of the electronic device may be reduced.

[FIG. 7]

S701: Obtain drawing data of a first image frame, where the first image frame is a to-be-drawn image frame in a target application

S702: Construct N primitive signed distance fields SDFs based on the drawing data

S703: Construct the N primitive SDFs into a global acceleration structure

S704: Draw the N primitive SDFs in the global acceleration structure according to a line-of-sight tracking algorithm

S705: Draw an animation effect of the N primitive SDFs

S706: Display the first image frame

**Description**

This application claims priority to Chinese Patent Application No. 202311839884.5, filed with the China National Intellectual Property Administration on December 27, 2023 and entitled "GRAPHICS DRAWING METHOD AND RELATED APPRATUS", which is incorporated herein by reference in its entirety.

TECHNICAL FIELD

This application relates to the field of terminals and image drawing, and in particular, to a graphics drawing method and a related apparatus.

BACKGROUND

A window (window) is one of the most important graphic user interfaces (graphic user interface, GUI) in an operating system. The window may be understood as a visual graphical interface of the operating system. For example, a desktop in an electronic device like a computer or a mobile phone is a window interface. The window provides a bridge between a user and the operating system, so that the user may interact with the operating system intuitively in a graphical interface manner. Windows are classified into planar windows (or referred to as conventional windows) and spatial windows according to dimensions. The planar window mainly focuses on a two-dimensional plane effect. Based on the two-dimensional plane effect, the spatial window combines a three dimension effect and a real physical simulation effect (for example, a blurring effect, a light and shadow effect, and a dynamic wallpaper).

With development of the operating system and a human-computer interaction theory, spatial windows are increasingly used and displayed in the electronic device. Currently, a conventional graphics drawing pipeline used to draw a planar window cannot draw the three-dimensional effect and the real physical simulation effect in the spatial window with high efficiency and low power consumption.

Therefore, how to draw the spatial window by the electronic device with high efficiency and low power consumption is an urgent problem to be resolved.

SUMMARY

This application provides a graphics drawing method and a related apparatus. According to the graphics drawing method provided in embodiments of this application, an electronic device can draw a spatial window with high efficiency and low power consumption.

According to a first aspect, this application provides a graphics drawing method. The method may include: An electronic device obtains drawing data of a first image frame, where the first image frame is a to-be-drawn image frame in a target application, and the drawing data is used to describe N controls included in the first image frame and attributes of the N controls; the electronic device constructs N corresponding primitive signed distance fields SDFs based on the N controls, where the N controls include a first control, the N primitive SDFs include a first primitive SDF corresponding to the first control, and the first primitive SDF is used to describe a location relationship between any point in space and the first control; the electronic device determines an occlusion relationship between the N controls based on the N primitive SDFs through line-of-sight tracking; the electronic device draws the first image frame based on the occlusion relationship between the N controls; and the electronic device displays the first image frame.

In this way, when drawing an image frame, the electronic device does not need to use a conventional triangle to express a control, so that an amount of data and repeated drawing can be reduced. After determining the occlusion relationship, the electronic device may draw the first image frame by invoking a drawing instruction once based on the occlusion relationship. When the first image frame has an animation effect, the first image frame may also be referred to as a spatial window. Regardless of whether the first image frame is a planar window or a spatial window, the electronic device can draw the first image frame with high efficiency and low power consumption.

With reference to the first aspect, in a possible implementation, that the electronic device constructs the N corresponding primitive signed distance fields SDFs based on the N controls may specifically include: The electronic device constructs a distance equation from any point in the space to the first control based on a geometric analysis formula corresponding to a geometric shape of the first control, where the distance equation is the first primitive SDF.

The geometric analysis formula corresponding to the geometric shape of the first control may be a Bezier curve analysis formula.

In this way, the electronic device may construct the first primitive SDF by using the geometric analysis formula corresponding to the first control.

With reference to the first aspect, in a possible implementation, that the electronic device constructs the N corresponding primitive signed distance fields SDFs based on the N controls may specifically include: The electronic device constructs a primitive bounding box that encloses the first control, and divides the primitive bounding box into k rectangles, where center points of the k rectangles represent k coordinate points that use a center of the first control as a coordinate origin; the electronic device calculates distances between the k coordinate points and a surface of the first control, to obtain k distance values; and the electronic device generates a texture image based on the k distance values, where the texture image is the first primitive SDF. In this way, the electronic device may construct the first primitive SDF corresponding to the first control, and the first primitive SDF is the texture image.

With reference to the first aspect, in a possible implementation, that the electronic device constructs the N corresponding primitive signed distance fields SDFs based on the N controls may specifically include: The electronic device constructs a first neural network, where an input of the first neural network is coordinates of any point in the space, an output of the first neural network is a distance between any point in the space and a surface of the first control, and the first neural network is the first primitive SDF. In this way, the electronic device may construct the first primitive SDF corresponding to the first control, and the first primitive SDF is the first neural network.

With reference to the first aspect, in a possible implementation, the method may further include: The electronic device clusters the N primitive SDFs according to a clustering rule, to obtain a global acceleration structure, where the global acceleration structure includes attributes of the N primitive SDFs; and the electronic device stores the global acceleration structure. In this way, the electronic device can more conveniently invoke or query an attribute of each primitive SDF.

With reference to the first aspect, in a possible implementation, the occlusion relationship includes screen visibility; and that the electronic device determines the occlusion relationship between the N controls based on the N primitive SDFs through line-of-sight tracking may specifically include: The electronic device constructs a first ray by using a first pixel on a display of the electronic device as a start point, where a direction of the first ray is perpendicular to the display; the electronic device queries the global acceleration structure, to determine that one or more controls exist in a direction of the first ray, where the N controls include the one or more controls; the electronic device determines, based on a primitive SDF corresponding to the one or more controls, a shortest distance between the first pixel and the one or more controls; and the electronic device determines, based on the shortest distance between the first pixel and the one or more controls, that a control visible to the first pixel is a second control in the one or more controls. In this way, the electronic device may determine a control finally visible to each pixel on the display.

With reference to the first aspect, in a possible implementation, the occlusion relationship includes spatial visibility; and that the electronic device determines the occlusion relationship between the N controls based on the N primitive SDFs through line-of-sight tracking may specifically include: The electronic device constructs a second ray by using a first point on a third control as a start point and a second point on a fourth control as an end point, where the N controls include the third control and the fourth control; the electronic device queries the global acceleration structure, to determine that a fifth control exists in a direction of the second ray; the electronic device determines, based on a primitive SDF corresponding to the fifth control, a distance between the first point and the fifth control; and the electronic device moves the second ray based on the distance between the first point and the fifth control, until the electronic device moves the start point of the second ray to the second point, and the electronic device determines that there is no obstacle between the third control and the fourth control. In this way, the electronic device can determine an occlusion relationship between controls in the first image frame.

With reference to the first aspect, in a possible implementation, after that the electronic device determines the occlusion relationship between the N controls based on the N primitive SDFs through line-of-sight tracking, the method may further include: The electronic device determines, from the drawing data, that a sixth control in the N controls has a shadow effect, and the electronic device calculates the shadow effect. In this way, the electronic device may determine the shadow effect in the first image frame.

With reference to the first aspect, in a possible implementation, that the electronic device calculates the shadow effect may specifically include: The electronic device determines a shadow radius and a shadow path of the sixth control, and constructs a shadow SDF based on the shadow radius and the shadow path; the electronic device calculates, based on the shadow SDF, a shortest distance between a second pixel and a shadow of the sixth control; the electronic device determines a shadow density of the second pixel based on the shadow radius and the shortest distance between the second pixel and the shadow of the sixth control; and the electronic device determines a color value of the second pixel based on the shadow density. In this way, the electronic device may determine impact of the shadow effect on a color value of each pixel on the display.

With reference to the first aspect, in a possible implementation, after that the electronic device determines the occlusion relationship between the N controls based on the N primitive SDFs through line-of-sight tracking, the method may further include: The electronic device determines, from the drawing data, that a seventh control in the N controls has a refraction effect and a reflection effect, and the electronic device calculates the refraction effect and the reflection effect. In this way, the electronic device may determine the refraction effect and the reflection effect in the first image frame.

With reference to the first aspect, in a possible implementation, that the electronic device calculates the refraction effect and the reflection effect may specifically include: The electronic device constructs a third ray by using a third pixel as a start point, where the third pixel is a pixel on a display of the electronic device, and a direction of the third ray is perpendicular to the display; the electronic device determines, based on line-of-sight tracking, the third ray reaches a third point of a surface of the seventh control; the electronic device determines a reflection direction and a refraction direction of the third ray at the third point; the electronic device queries an environment texture based on the reflection direction, and determines that a color value of an environment is a first color value; the electronic device moves the third ray based on the refraction direction, where the third ray reaches a fourth point in a background image; the electronic device obtains a second color value of the fourth point in the background image; and the electronic device determines a color value of the third pixel based on the first color value and the second color value. In this way, the electronic device may determine impact of the refraction effect and the reflection effect on a color value of each pixel on the display.

With reference to the first aspect, in a possible implementation, before that the electronic device constructs the corresponding N primitive SDFs based on the N controls, the method may further include: The electronic device determines a control that has an animation effect in the N controls.

With reference to the first aspect, in a possible implementation, after that the electronic device determines the control that has the animation effect in the N controls, the method may further include: The electronic device constructs a corresponding primitive SDF based on the control that has the animation effect in the N controls; the electronic device determines an occlusion relationship between the controls that have the animation effect through line-of-sight tracking, and draws, based on the occlusion relationship, the controls that have the animation effect; the electronic device draws, based on a rasterization drawing method, a control that does not have the animation effect in the N controls; and the electronic device fuses a drawing result of the control that has the animation effect and a drawing result of the control that does not have the animation effect, to obtain the first image frame, and the electronic device displays the first image frame.

In this way, the electronic device may draw the control that has the animation effect and the control that does not have the animation effect in parallel, so that efficiency of drawing the first image frame can be improved.

According to a second aspect, an electronic device is provided. The electronic device may include a display, one or more processors, and one or more memories. The display, the one or more memories, and the one or more processors are coupled to each other. The one or more memories are configured to store computer program code, the computer program code includes computer instructions, and when the one or more processors execute the computer instructions, the electronic device is enabled to perform the method according to any possible implementation of the first aspect.

According to a third aspect, an electronic device is provided. The electronic device may include one or more functional modules, and the one or more functional modules are configured to perform the method according to any possible implementation of the first aspect.

According to a fourth aspect, a chip system is provided. The chip system is applied to an electronic device, the chip system includes one or more processors, and the processor is configured to invoke computer instructions, to enable the electronic device to perform the method according to any possible implementation of the first aspect.

According to a fifth aspect, a computing-readable storage medium is provided. The computing-readable storage medium includes instructions. When the instructions are run on an electronic device, the electronic device is enabled to perform the method according to any possible implementation of the first aspect.

According to a sixth aspect, a computer program product is provided. When the program product runs on an electronic device, the electronic device is enabled to perform the method according to any possible implementation of the first aspect.

BRIEF DESCRIPTION OF DRAWINGS

FIG. 1A is a diagram of a planar window according to an embodiment of this application;
FIG. 1B(a), FIG. 1B(b), FIG. 1B(c), and FIG. 1B(d) are diagrams of a group of spatial windows according to an embodiment of this application;
FIG. 2 is a diagram of comparison between a primitive relationship in a planar window and a primitive relationship in a spatial window according to an embodiment of this application;
FIG. 3A and FIG. 3B are diagrams of a drawing process of a window with a blurring effect according to an embodiment of this application;
FIG. 4A and FIG. 4B are a diagram of a drawing process of a window with a shadow effect according to an embodiment of this application;
FIG. 5 is a diagram of a structure of an electronic device according to an embodiment of this application;
FIG. 6 is a diagram of a software framework of an electronic device according to an embodiment of this application;
FIG. 7 is a schematic flowchart of a graphics drawing method according to an embodiment of this application;
FIG. 8 is a diagram of a plurality of expression manners of a primitive signed distance field SDF according to an embodiment of this application;

FIG. 9 is a diagram of an analytical expression of a circular primitive SDF according to an embodiment of this application;

FIG. 10 is a diagram of a discrete expression of a circular primitive SDF according to an embodiment of this application;

FIG. 11 is a diagram of a neural network expression of a circular primitive SDF according to an embodiment of this application;

FIG. 12 is a diagram of a global acceleration structure of a primitive SDF according to an embodiment of this application;

FIG. 13 is a diagram of screen visibility determining according to an embodiment of this application;

FIG. 14 is a diagram of spatial visibility determining according to an embodiment of this application;

FIG. 15 is a diagram of calculating a shadow effect according to an embodiment of this application;

FIG. 16 is a diagram of calculating a refraction effect and a reflection effect according to an embodiment of this application;

FIG. 17A, FIG. 17B, FIG. 17C and FIG. 17D are a diagram of comparison between different drawing processes according to an embodiment of this application; and

FIG. 18 is a diagram of a structure of another electronic device according to an embodiment of this application.

DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

Terms used in the following embodiments of this application are merely intended to describe specific embodiments, but are not intended to limit this application. The terms "one", "a", "an", "the", and "this" of singular forms used in this specification and the appended claims of this application are also intended to include plural forms, unless otherwise specified in the context clearly. The terms "first" and "second" are merely intended for a purpose of description, and shall not be understood as an indication or implication of relative importance or an implicit indication of a quantity of indicated technical features. Therefore, a feature limited by "first" or "second" may explicitly or implicitly include one or more features. The terms "first", "second", and so on are intended to distinguish between different objects but do not indicate a particular order of the objects. For example, a first object and a second object are used to distinguish between different objects, but are not used to describe a specific order of the objects.

In the descriptions of embodiments of this application, unless otherwise specified, "a plurality of" means two or more. For example, a plurality of processing units mean two or more processing units, and a plurality of systems mean two or more systems.

In embodiments of this application, the word "example" or "for example" is used to represent giving an example, an illustration, or a description. Any embodiment or involved scheme described as an "example" or "for example" in embodiments of this application should not be explained as being more preferred or having more advantages than another embodiment or design scheme. Exactly, use of the term like "example" or "for example" is intended to present a related concept in a specific manner.

The term "and/or" in this application describes only an association relationship for describing associated objects and represents that three relationships may exist. For example, A and/or B may represent the following three cases: Only A exists, both A and B exist, and only B exists.

In this embodiment of this application, an electronic device 100 can display a planar window and a spatial window. The electronic device 100 may include but is not limited to a device having a function of drawing and displaying the spatial window, for example, a mobile phone, a tablet computer, or a computer. Specific forms and types of the electronic device 100 are not limited in embodiments of this application.

The term "user interface (user interface, UI)" in the following embodiments of this application is a medium interface for interaction and information exchange between an application or an operating system and a user, and implements conversion between an internal form of information and a form acceptable to the user. The user interface is source code written in a specific computer language like Java or an extensible markup language (extensible markup language, XML). The interface source code is parsed and rendered on an electronic device, and is finally presented as content that can be identified by the user. A commonly-used representation form of the user interface is a graphic user interface (graphic user interface, GUI), and is a user interface that is displayed in a graphical manner and that is related to a computer operation. The user interface may be a visual interface element like a text, an icon, a button, a menu, a tab, a text box, a dialog box, a status bar, a navigation bar, or a widget that is displayed on a display of the electronic device.

In embodiments of this application, the window may also be referred to as a user interface. The window is drawn and presented by the electronic device by using a graphics pipeline. The window may include a window animation. The window animation is a general term of a visual effect (visual effect) and an animation effect (animation effect) of the window.

The visual effect is mainly a static effect, and is presented after graphics rendering. The animation effect is mainly a dynamic effect, and is dynamically presented by graphics. The visual effect and the animation effect are cores of window interaction. The visual effect may be referred to as a visual effect for short, and the animation effect may be referred to as an animation effect for short.

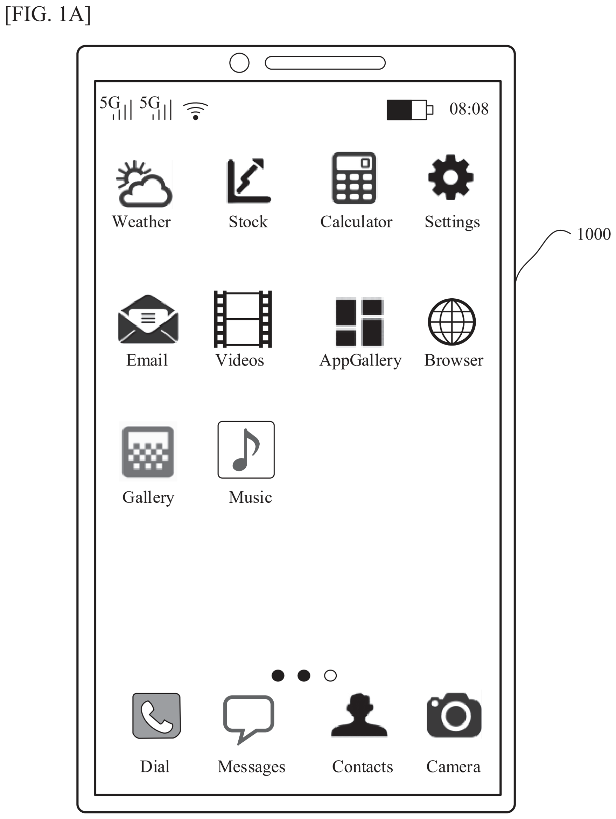

The planar window mainly includes a two-dimensional visual effect. For example, as shown in FIG. 1A, a desktop 1000 shown by an electronic device is a planar window. The desktop 1000 includes only a two-dimensional plane effect. It may be understood that this application is merely described by using an example in which the desktop is currently a planar window. In future development, the desktop of the electronic device may also develop into a spatial window. This is not limited in this embodiment of this application.

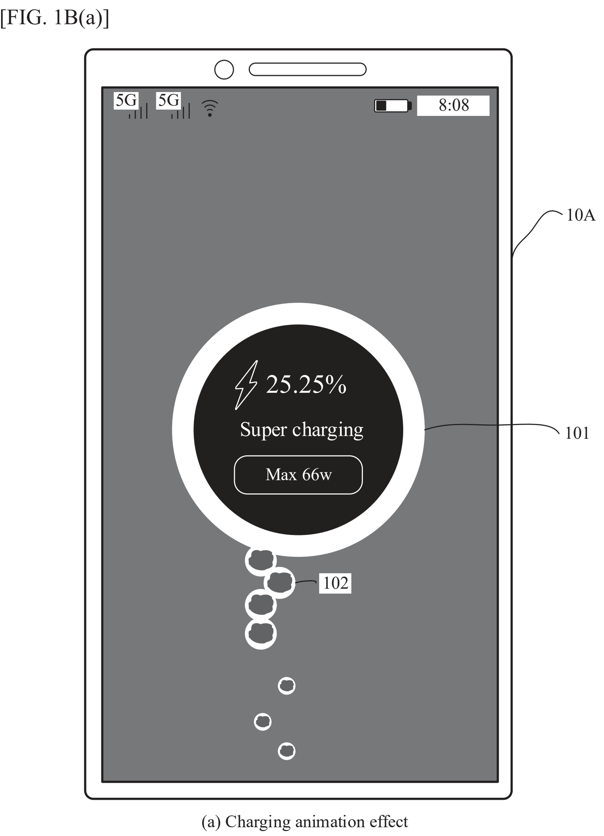

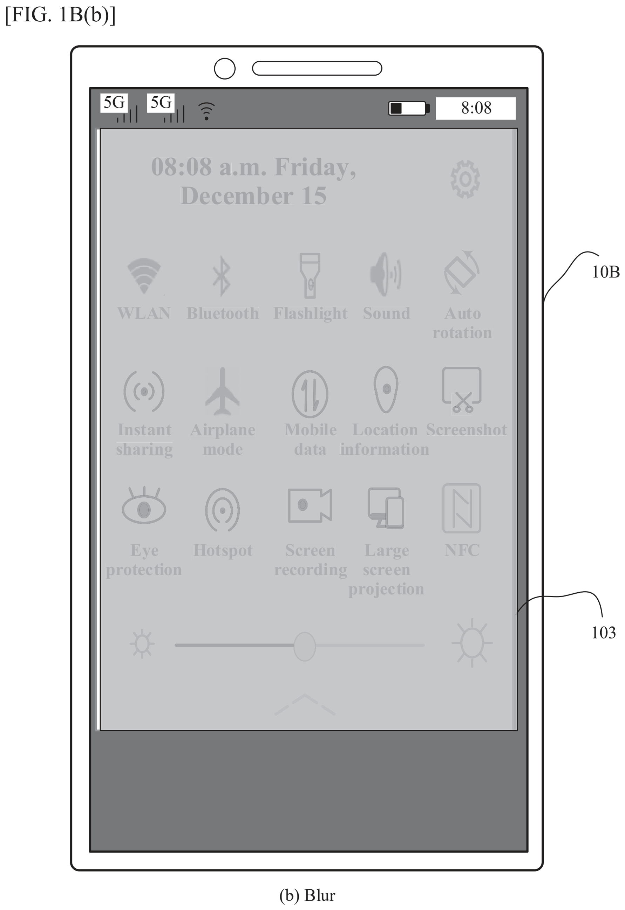

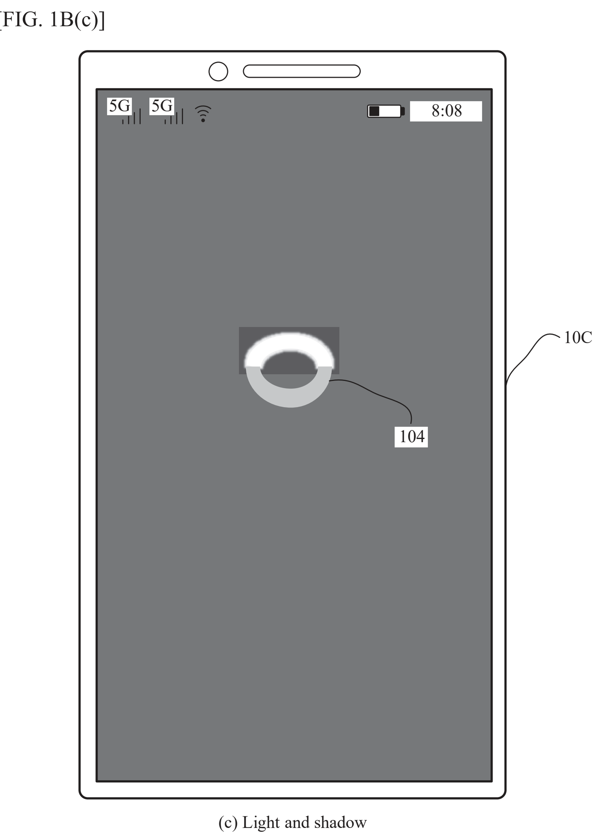

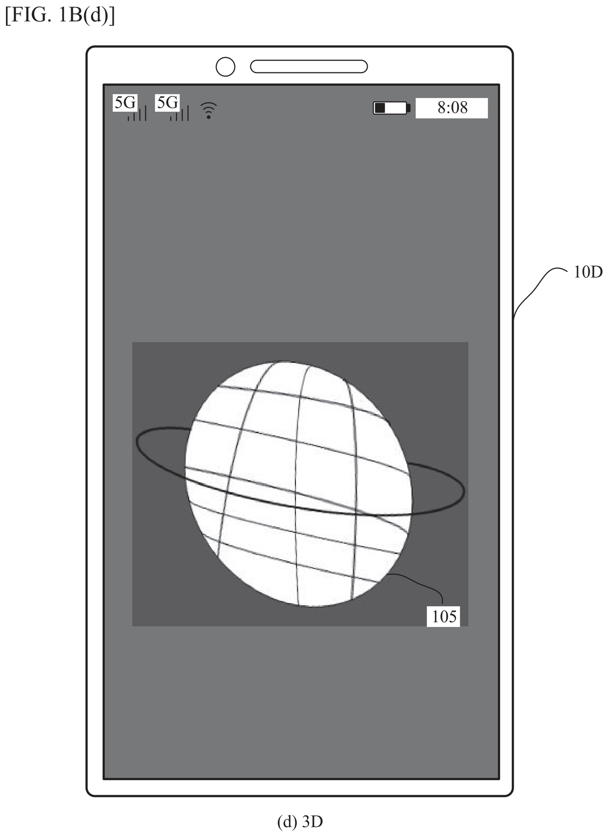

Based on the two-dimensional plane effect, the spatial window combines a three dimension effect and a real physical simulation effect (for example, a blurring effect, a light and shadow effect, and a dynamic wallpaper). The spatial window may include a visual effect and an animation effect. For example, as shown in FIG. 1B(a), the electronic device may display a user interface 10A when being charged. The user interface 10A may be a spatial window, and the user interface 10A may include a control 101 and a control 102. The control 101 may include a light emitting animation effect, and the control 102 may include a light emitting bubble animation effect. As shown in FIG. 1B(b), the electronic device may display a user interface 10B. The user interface 10B may be a spatial window, and the user interface 10B may include a control 103. The control 103 may have a blurring effect. As shown in FIG. 1B(c), the electronic device may display a user interface 10C. The user interface 10C may be a spatial window, and the user interface may include a control 104. The control 104 may have a light and shadow effect. As shown in FIG. 1B(d), the electronic device may display a user interface 10D. The user interface 10D may be a spatial window, and the user interface 10D may include a control 105. The control 105 may be a three-dimensional sphere.

It may be understood that the spatial windows shown in FIG. 1B(a), FIG. 1B(b), FIG. 1B(c), and FIG. 1B(d), for example, the user interface 10A, the user interface 10B, the user interface 10C, and the user interface 10D, are merely examples. Specific content included in the spatial window and a specific display form of the spatial window are not limited in this embodiment of this application.

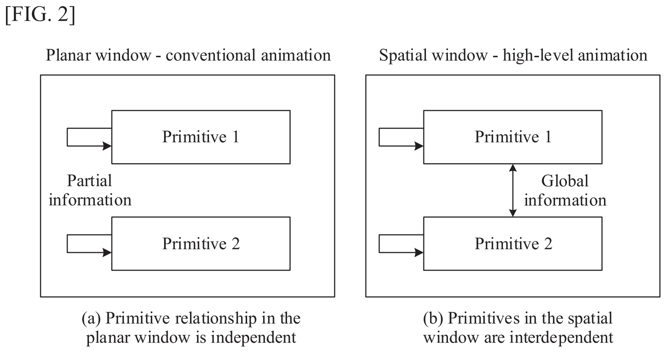

As shown in (a) in FIG. 2, a relationship between primitives in a planar window is independent. For example, a primitive 1 and a primitive 2 are independent of each other. Only partial information of the primitive 1 is required when the primitive 1 in the planar window is drawn. Only partial information of the primitive 2 is required when the primitive 2 in the planar window is drawn. As shown in (b) in FIG. 2, a relationship between primitives in a spatial window is interdependent. For example, a primitive 1 and a primitive 2 depend on each other, and global information is required when the primitive 1 and the primitive 2 in the spatial window are drawn.

In some embodiments, a drawing pipeline used to draw an animation effect in a spatial window is based on a conventional rasterization drawing process. When drawing the spatial window, an electronic device first uses a triangle to represent a primitive in the spatial window. For example, a rectangular primitive needs to be represented by two triangles. A circular primitive may need to be represented by more than 100 triangles. Then, the electronic device determines visibility according to a triangle rasterization method, and draws the primitives in the spatial window from bottom to top, where an upper-layer primitive covers a lower-layer primitive. The final window animation effect of the spatial window is formed through superimposing based on a plurality of drawcall (drawcall) instructions. In this way, when invoking the drawcall instruction for drawing a plurality of times, the electronic device needs to read and write a video memory additionally. A quantity of drawcall instructions in a system of the electronic device is too high. Although a calculation amount of a single drawcall instruction is not high, each drawcall has specific basic power consumption. The high quantity of drawcall instructions causes a waste of computing resources. In addition, the plurality of drawcall instructions communicate with each other through the video memory, and bandwidth consumption increases linearly with the quantity of drawcall instructions.

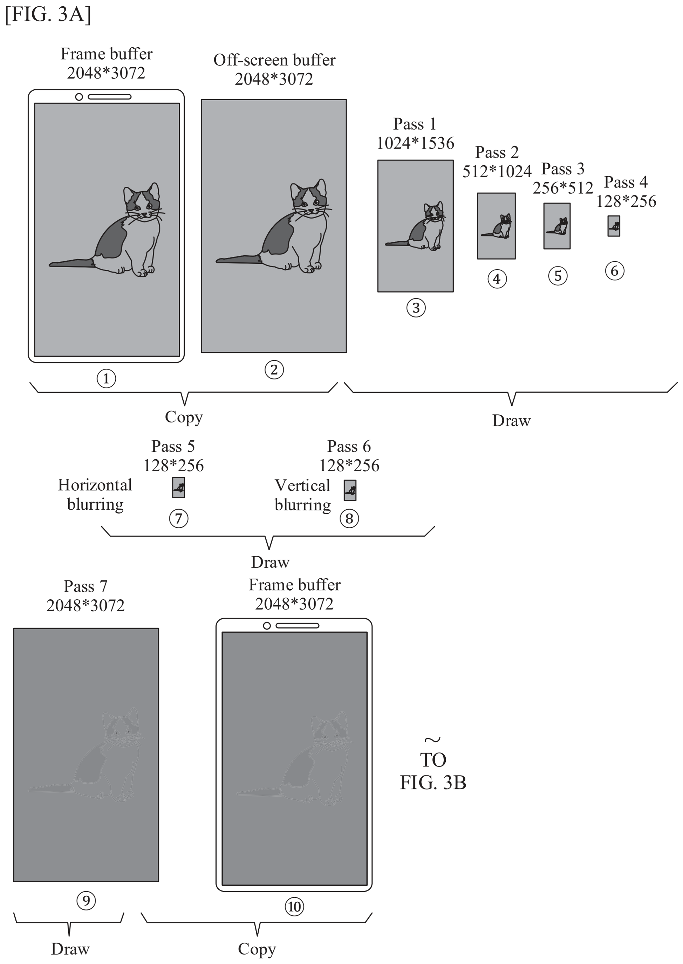

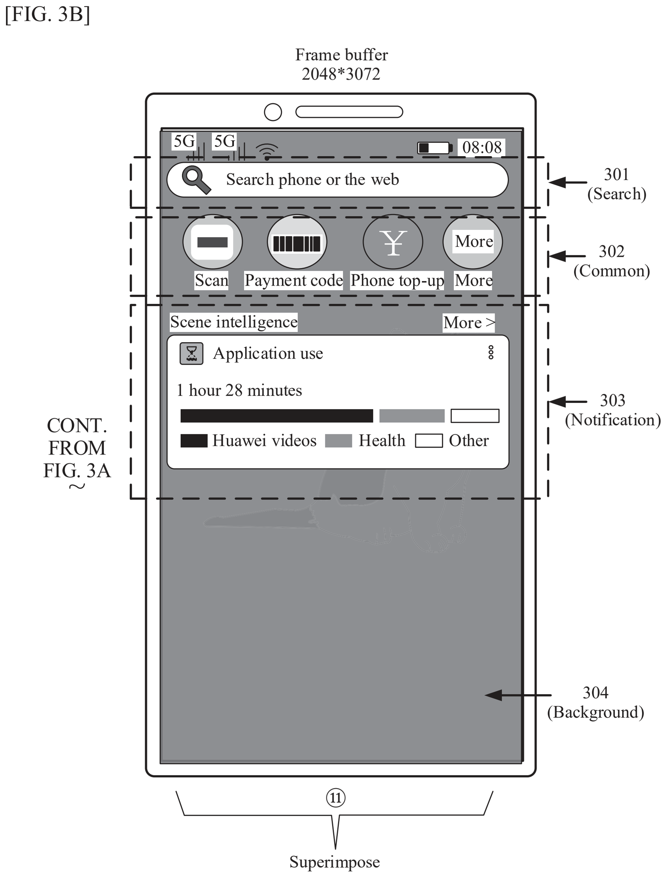

FIG. 3A and FIG. 3B show an example of a drawing process of a window with a blurring effect. As shown in ① in FIG. 3A, an electronic device first needs to obtain, from a frame buffer (frame buffer), a control that needs to be drawn into a blurring effect. Then, as shown in (2) in FIG. 3A, the electronic device may copy the control to a frame buffer used for drawing. The frame buffer used for drawing may also be referred to as an off-screen buffer (off-screen buffer). As shown in ③, ④, ⑤, and ⑥ in FIG. 3A, the electronic device may perform downsampling on the control a plurality of times, and change a resolution of the control from 2048*3072 to 128*256. Then, as shown in ⑦ in FIG. 3A, the electronic device may perform horizontal blurring on the control. As shown in ⑧ in FIG. 3A, the electronic device may perform vertical blurring on the control. Then, as shown in ⑨ in FIG. 3A, the electronic device performs upsampling on the control after the blurring processing, to obtain a control with a resolution of 2048*3072 and a blurring effect. Then, as shown in ⑩ in FIG. 3A, the electronic device copies the control with the blurring effect in ⑨ in FIG. 3A to the frame buffer. Finally, as shown in ⑪ in FIG. 3B, the electronic device may superimpose, on the basis of the control shown in ⑩ in FIG. 3A, a drawn control 301 (which may be referred to as a search control), a control 302 (which may be referred to as a common control), and a control 303 (which may be referred to as a notification control) on the control with the blurring effect (namely, a control 304, which may also be referred to as a background control).

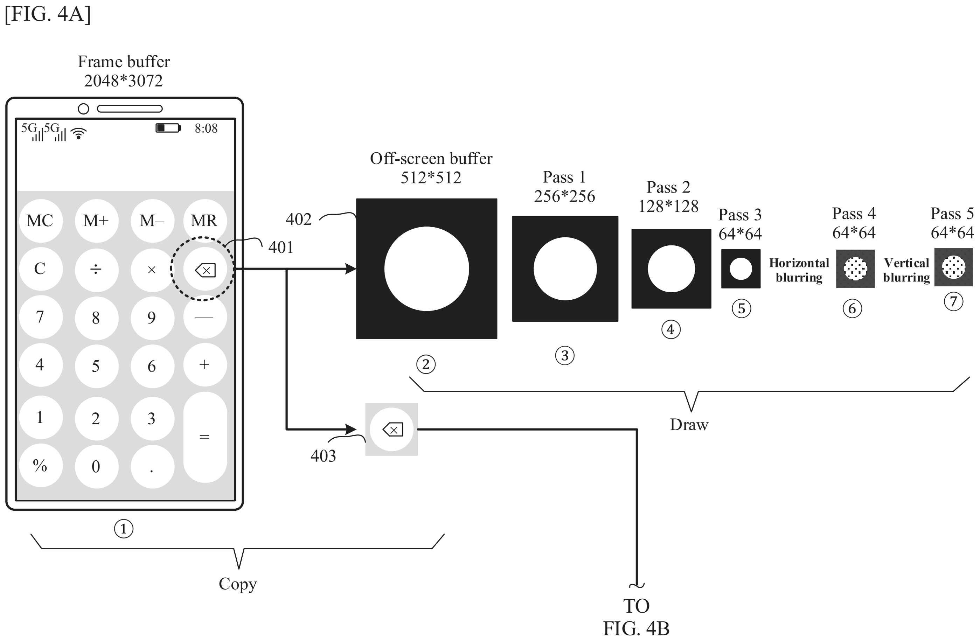

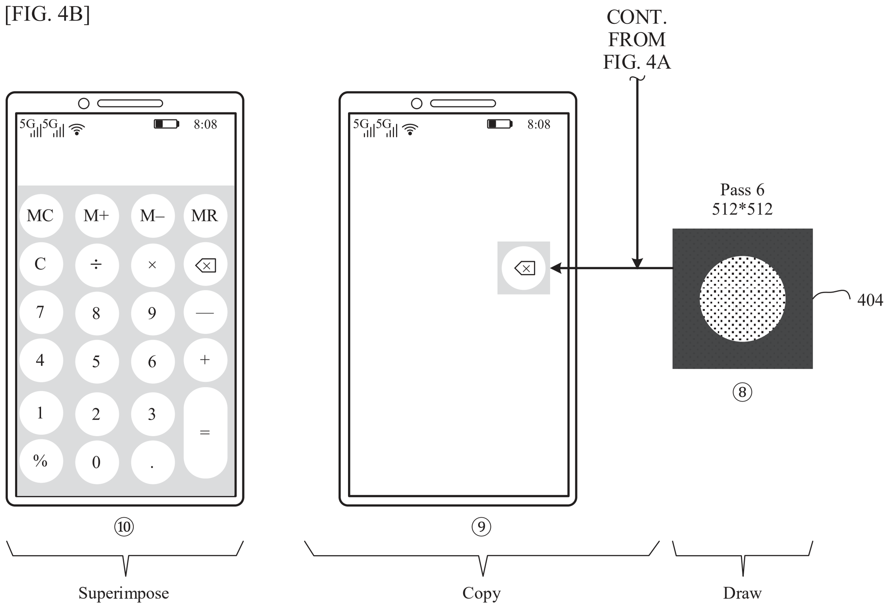

FIG. 4A and FIG. 4B show an example of a drawing process of a window with a shadow effect. As shown in ① in FIG. 4A, an electronic device first needs to obtain, from a frame buffer (frame buffer), a control (namely, a control 401) that needs to be drawn into a shadow effect. Then, as shown in ② in FIG. 4A, the electronic device may copy a shadow part in the control 401, namely, a primitive 402, to an off-screen buffer. As shown in ③, ④, and ⑤ in FIG. 4A, the electronic device may perform downsampling on the primitive 402 a plurality of times, and change a resolution of the primitive 402 from 512*512 to 64*64. Then, as shown in ⑥ in FIG. 4A, the electronic device may perform horizontal blurring on the primitive 402, and as shown in ⑦ in FIG. 4A, the electronic device may perform vertical blurring on the primitive 402. Then, as shown in ⑧ in FIG. 4B, the electronic device performs upsampling on the primitive 402 after the blurring processing, to obtain a primitive 404 with a resolution of 512*512 and a shadow effect. Then, as shown in ⑨ in FIG. 4B, the electronic device copies a primitive 403 and the primitive 404 with a blurring effect in ⑧ in FIG. 4B to the frame buffer. Finally, as shown in ⑩ in FIG. 4B, the electronic device may superimpose, on the basis of the control shown in ⑨ in FIG. 4B, other controls in a calculator interface, to obtain a final calculator interface visible to a user.

The electronic device needs to invoke the drawcall instruction a plurality of times in both drawing phases of the blurring effect shown in FIG. 3A and FIG. 3B and the shadow effect shown in FIG. 4A and FIG. 4B. For example, Table 1 shows related statistical data in the drawing phases of the blurring effect shown in FIG. 3A and FIG. 3B and the shadow effect shown in FIG. 4A and FIG. 4B.

Table 1

| Animation effect | Quantity of invoked drawcalls (Unit: number) | Bandwidth occupied by accessing a video memory | Frame rate (Unit: FPS, indicating a quantity of frames transmitted per second) |
|---|---|---|---|
| Blurring | 35 | 20M | 45 |
| Shadow | 135 | 1M | 57 |

As shown in Table 1, when the electronic device draws a user interface with the blurring effect shown in ⑪ in FIG. 3B, the electronic device needs to invoke 35 drawcall instructions for drawing. Additional video memory access between the plurality of drawcalls needs to occupy a bandwidth of 20M, and can reach only a frame rate of 45 FPS. When the electronic device draws a user interface with the shadow effect shown in ⑩ in FIG. 4B, the electronic device needs to invoke 135 drawcall instructions for drawing. Additional video memory access between the plurality of drawcalls needs to occupy a bandwidth of 1M, and can reach only a frame rate of 57 FPS.

In this way, it can be learned from Table 1 that, when the spatial window is drawn based on a conventional rasterization drawing process, both the quantity of drawcalls and bandwidth consumption are high, and a target scene (for example, a game scene) cannot reach an expected target frame rate (for example, 90 FPS).

Reasons for high power consumption caused by drawing the spatial window by the electronic device based on the conventional rasterization drawing process are as follows: 1. Simple primitive: A primitive is represented by using a triangle, and some primitives require a large quantity of triangles. As a result, costs of a single drawcall are high. 2. Redundant drawing: When a primitive is drawn, an upper-layer primitive blocks a lower-layer primitive. As a result, calculation is wasted and efficiency of a single drawcall is reduced. 3. Partial access: A single drawcall can access only partial information of a primitive, but cannot access global information between primitives. 4. Separate rendering: A plurality of animations in the spatial window are rendered separately. As a result, data is missing between the plurality of animations, and the drawcall is repeated.

To improve performance of drawing the window and reduce the power consumption of the electronic device during window drawing, embodiments of this application provide a graphics drawing method and an electronic device. In the graphics drawing method provided in embodiments of this application, a primitive expression and a drawing process are improved, so that a quantity of drawcalls, a quantity of times of accessing a video memory, and repeated drawing can be effectively reduced during drawing of the spatial window. Before the graphics drawing method provided in embodiments of this application is described, the following first describes a hardware structure and a software framework of the electronic device provided in embodiments of this application.

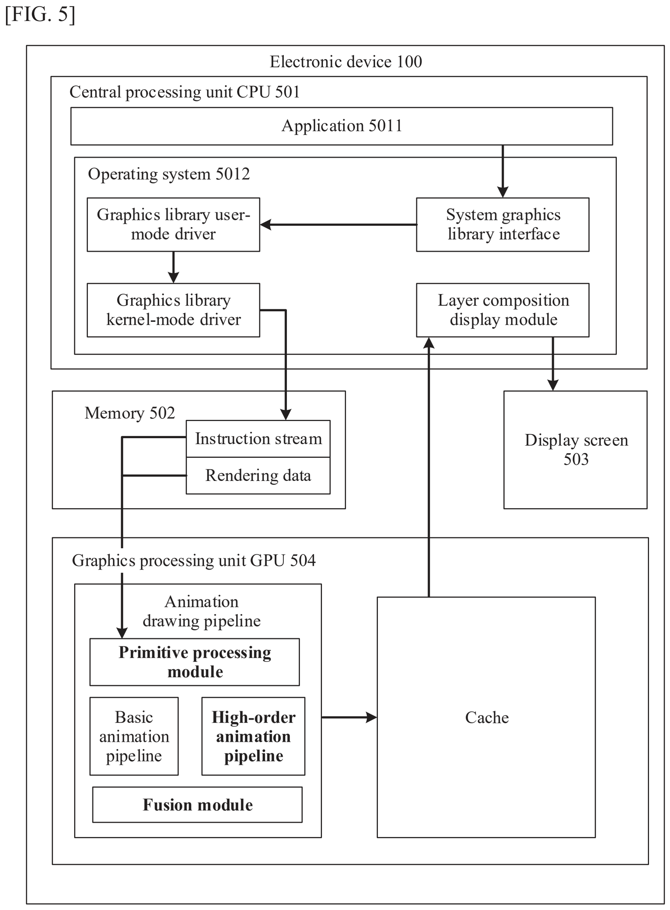

FIG. 5 is a diagram of a structure of an electronic device 100 according to an embodiment of this application.

As shown in FIG. 5, the electronic device 100 may include a central processing unit CPU 501, a memory 502, a display screen 503, and a graphics processing unit GPU 504. Optionally, the electronic device 100 may further include a communication bus configured to connect the components.

It may be understood that the components in the electronic device 100 may alternatively be coupled to each other via another connector, and the another connector may include various interfaces, transmission lines, buses, or the like. The components in the electronic device 100 may alternatively be connected in a radioactive manner by using the CPU 501 as a center. In embodiments of this application, coupling is mutual electrical connection or communication, including direct connection or indirect connection via another device.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or there may be a different component arrangement. The components shown in the figure may be implemented by hardware, software, or a combination of software and hardware.

In this embodiment of this application, the CPU 501 and the GPU 504 in the electronic device 100 may be located on a same chip, or may be independent chips. This is not limited in this embodiment of this application.

The CPU 501 may include an application 5011 and an operating system 5012. The CPU 501 may run the operating system 5012 and the application 5011. The application 5011 may be a graphics application, for example, a game application or a video application. The operating system 5012 may include a system graphics library interface and a driver program, for example, a graphics library user-mode driver and/or a graphics library kernel-mode driver. The system graphics library interface includes but is not limited to a system graphics library like an open graphics library for embedded systems (open graphics library for embedded systems, OpenGL ES), the Khronos platform graphics interface (the Khronos platform graphics interface), or Vulkan (a cross-platform drawing application programing interface). The graphics library user-mode driver and/or the graphics library kernel-mode driver may generate an instruction stream used to render a graphics or an image frame, and required related rendering data. The instruction stream may include a series of instructions, and these instructions are usually instructions for invoking a system graphics library interface.

The operating system 5012 may further include a layer display synthesis module. The layer display synthesis module may be configured to send, to the display screen 503, a drawing result obtained by the GPU 504 based on a drawing instruction.

The memory 502 may store an instruction stream and rendering data generated by the graphics library user-mode driver or the graphics library kernel-mode driver.

The graphics processing unit CPU 504 may include an animation drawing pipeline and a cache. The animation drawing pipeline may include a primitive processing module, a basic animation pipeline, a high-level animation pipeline, and a fusion module. The animation drawing pipeline may be configured to draw rendering data based on a drawcall instruction in the instruction stream. Specifically, the primitive processing module may represent a primitive in the rendering data as a primitive signed distance field (signed distance field, SDF). The basic animation pipeline may be used to draw a primitive SDF without an animation effect. The high-level animation pipeline may be used to draw a primitive SDF with an animation effect. The fusion module may be configured to fuse a drawing result of the basic animation pipeline and a drawing result of the high-level animation drawing pipeline. The fusion module may store the drawing result in the cache.

In embodiments of this application, the SDF may also be referred to as a directed distance field. The SDF is used to describe a function of a spatial location. When coordinates of a point in space are transferred, the SDF returns a shortest distance between the point and a specific surface (a curve or a curved surface) in the space. A sign of a return value indicates whether the point is inside or outside the surface.

The primitive SDF may be used to describe a location relationship between each point in the space and the primitive. The primitive SDF may be expressed in a plurality of manners. For details, refer to the following description. Details are not described herein.

The display screen 503 may be configured to display various images generated by the electronic device 100. The image may be a GUI of the operating system 5012, or image data (including a still image and video data) processed by the GPU 504. In this embodiment of this application, the display screen 503 may be configured to display a received drawing result.

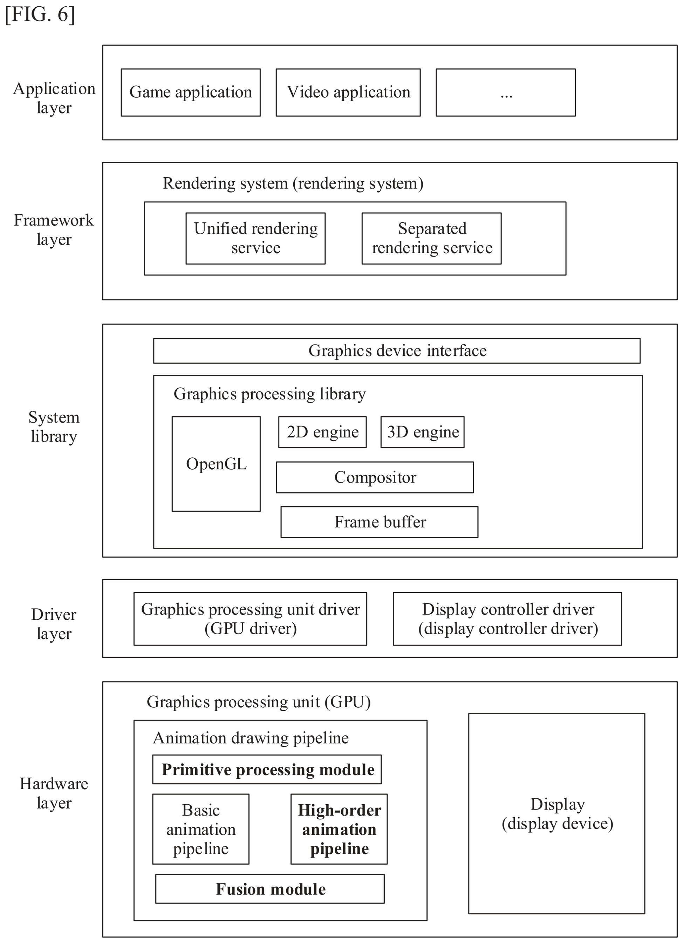

FIG. 6 is a diagram of a software framework of the electronic device 100 according to an embodiment of this application.

In a layered architecture, software is divided into several layers, and each layer has a clear role and task. The layers communicate with each other through a software interface. In some embodiments, a system (for example, the operating system 5012 shown in FIG. 5) is divided into four layers: an application layer, an application framework layer, a runtime (Runtime) and system library, and a kernel layer from top to bottom.

The application layer may include a series of application packages.

As shown in FIG. 6, the application packages may include a game application, a video application, and the like.

In some embodiments, the application packages may further include applications (or referred to as apps) such as Camera, Gallery, Calendar, Call, Map, Navigation, WLAN, Bluetooth, Music, Videos, and Messages.

It may be understood that the application layer may further include the application 5011 shown in FIG. 5.

The application framework layer (which may also be referred to as a framework layer for short) may provide an application programming interface (application programming interface, API) and a programming framework for an application at the application layer. The application framework layer includes some predefined functions.

As shown in FIG. 6, the application framework layer may include a rendering system (rendering system, RS). The rendering system may include a unified rendering service and a separate rendering service. The separate rendering service may be used to generate a separate rendering instruction and rendering data. The separate rendering instruction may be delivered to a GPU. The GPU may generate, based on the separate rendering instruction and the rendering data, a basic geometric graphic skeleton including a triangle by using a vertex shader (vertex shader). Then, the basic animation pipeline in the GPU may fill a color by using a pixel shader (pixel shader), and then perform mapping. The unified rendering service may be used to generate a unified rendering instruction and rendering data. The animation drawing pipeline in the GPU may first generate one or more primitive SDFs from the rendering data based on the unified rendering instruction and the rendering data, and then draw the one or more primitive SDFs by using one drawcall instruction, to obtain a drawing result.

The system library may include a plurality of functional modules, for example, a graphics device interface and a graphics processing library. The rendering system may invoke the graphics processing library by using the graphics device interface. The graphics processing library may include an open graphics library (open graphics library, OpenGL), a two-dimensional (2-Dimensional, 2D) graphics engine (which may be referred to as a 2D engine for short), a three-dimensional (3-Dimensional, 3D) graphics engine, a compositor, and a frame buffer. The OpenGL is an application programming interface/function library, and the OpenGL may further include an OpenGL ES. The 2D engine is a drawing engine for drawing. The 3D engine is a drawing engine for 3D drawing. The compositor may provide fusion of a 2D layer and a 3D layer for a plurality of applications. The frame buffer may also be referred to as a frame buffer, and may be configured to buffer an image frame obtained through drawing.

In some embodiments, the graphics processing library may be the system graphics library interface shown in FIG. 5.

The driver layer is a layer between hardware and software. The driver layer includes at least a graphics processing unit driver (GPU driver) and a display controller driver (display controller driver).

In some embodiments, the driver layer may further include a camera driver, an audio driver, a sensor driver, and a virtual card driver.

In some embodiments, the driver layer may also be referred to as a kernel layer.

In some embodiments, the driver layer may further include the graphics library kernel-mode driver shown in FIG. 5.

The following describes an example of a working procedure of software and hardware of the electronic device 100 with reference to a photographing scenario.

When a touch sensor receives a touch operation, a corresponding hardware interrupt is sent to the kernel layer. The kernel layer processes the touch operation into an original input event (including information like touch coordinates and a timestamp of the touch operation). The original input event is stored at the kernel layer. The application framework layer obtains the original input event from the kernel layer, and identifies a control corresponding to the input event. In an example in which the touch operation is a touch tap operation, and a control corresponding to the tap operation is a control of a camera application icon, a camera application invokes an interface of the application framework layer to start the camera application and further start a lens driver by invoking the kernel layer, so as to capture a static image or a video by using a lens.

The following describes in detail a graphics drawing method provided in embodiments of this application with reference to the foregoing software and hardware architectures of the example electronic device 100. The graphics drawing method provided in this application may include: First, the electronic device 100 may obtain drawing data of a first image frame, where the first image frame is a to-be-drawn image frame in a target application. The electronic device 100 may construct the N primitive SDFs based on the drawing data. Then, the electronic device 100 may determine screen visibility of the N primitive SDFs through line-of-sight tracking. Then, the electronic device 100 may draw the N primitive SDFs based on the screen visibility of the N primitive SDFs, to obtain a drawing result of the first image frame. Finally, the electronic device 100 may send and display the drawing result, and display the first image frame.

Optionally, the electronic device 100 may further construct the N primitive SDFs into a global acceleration structure, and store the global acceleration structure.

In this way, the electronic device 100 represents the primitive by using the SDF, to avoid a problem that an amount of data is excessively large because the primitive is represented by using a triangle in a conventional drawing pipeline. The N primitives are constructed into the global acceleration structure, and the electronic device can conveniently access global information during drawing. The electronic device determines the screen visibility of the primitive through line-of-sight tracking, and can obtain the drawing result by invoking the drawcall only once. In addition, the electronic device 100 does not need to access additional video memory during drawing, so that bandwidth consumption may be reduced.

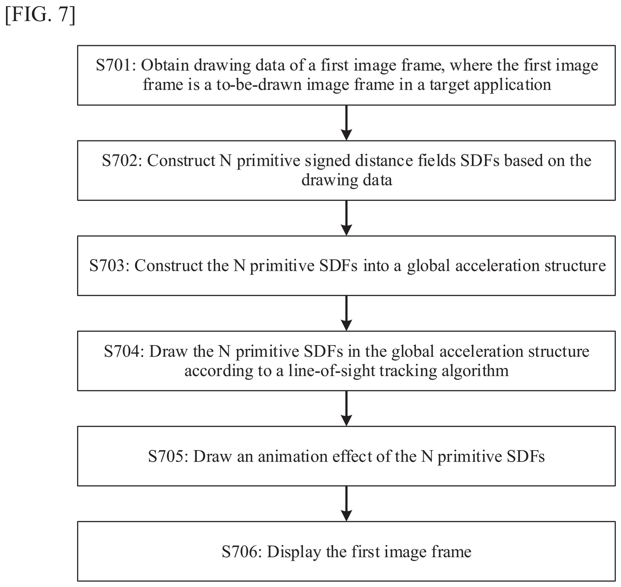

FIG. 7 is a schematic flowchart of a graphics drawing method according to an embodiment of this application. As shown in FIG. 7, the graphics drawing method provided in this embodiment of this application may include the following steps.

S701: An electronic device 100 obtains drawing data of a first image frame, where the first image frame is a to-be-drawn image frame in a target application.

The target application may be a game application or a video application installed in the electronic device.

When the target application is started or a user interface is refreshed, the target application may deliver drawing data of the to-be-drawn image frame to the electronic device 100. The to-be-drawn image frame may be the first image frame. The drawing data is used to describe a control included in the first image frame and an attribute of the control. For example, the attribute of the control may include but is not limited to a name of the control, a shape of the control, a size of the control, a location of the control, and a color of the control. In some examples, the location of the control may be represented as coordinates of the control in the first image frame. Optionally, in some other embodiments, the location of the control may be represented as a distance between the control and a top of the first image frame and a distance between the control and a left frame of the first image frame.

Optionally, in a possible implementation, the drawing data is in an extensible markup language (extensible markup language, XML) file, and the target application may deliver the XML file including the drawing data.

S702: The electronic device 100 constructs N primitive signed distance fields SDFs based on the drawing data.

A plurality of controls described by the drawing data may be represented by N primitives. One control or a plurality of controls may correspond to one primitive. Then, the electronic device 100 may construct the N primitives into the N primitive signed distance fields SDFs.

It may be understood that each control may include one or more interface elements, for example, a text, a picture, and an icon. In some examples, each interface element included in the control may also be referred to as a control or a sub-control. This is not limited in this embodiment of this application.

N is a positive number. For example, N may be 1, N may be 2, or N may be 3. A specific value of N is not limited in this embodiment of this application.

In this embodiment of this application, the primitive SDF may be expressed in a plurality of manners, for example, an analytical expression, a discrete expression, and a neural network expression.

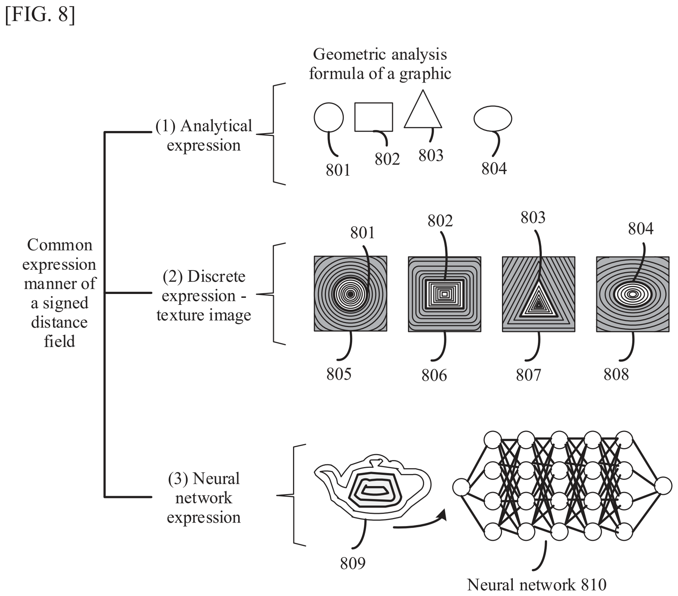

For example, as shown in FIG. 8, the analytical expression of an original primitive of the control may include an original geometric analysis formula of a graphic, for example, a Bezier curve analysis formula. Then, the electronic device 100 may construct, based on a geometric expression of the original primitive, an equation of a distance between any point on a display and the original primitive. The equation is an analytical expression of a primitive SDF corresponding to the control.

For example, when the control is a circular control 801 shown in FIG. 8, the electronic device 100 may express the circular control 801 by using a geometric analysis formula of a circle. Then, the electronic device 100 may construct, based on a geometric expression of the circle, an equation 1 of a distance between any point on the display and a surface of the circular control 801. The equation 1 is an analytical expression of a primitive SDF corresponding to the circular control 801.

For another example, when the control is a rectangular control 802 shown in FIG. 8, the electronic device 100 may express the rectangular control 802 by using a geometric analysis formula of a rectangle. Then, the electronic device 100 may construct, based on a geometric expression of the rectangle, an equation 2 of a distance between any point on the display and a surface of the rectangular control 802. The equation 2 is an analytical expression of a primitive SDF corresponding to the rectangular control 802.

When the control is a triangular control 803 shown in FIG. 8, the electronic device 100 may express the triangular control 803 by using a geometric analysis formula of a triangle. Then, the electronic device 100 may construct, based on a geometric expression of the triangle, an equation 3 of a distance between any point on the display and a surface of the triangular control 803. The equation 3 is an analytical expression of a primitive SDF corresponding to the triangular control 803.

When the control is an oval control 804 shown in FIG. 8, the electronic device 100 may express the oval control 804 by using a geometric analysis formula of an oval. Then, the electronic device 100 may construct, based on a geometric expression of the oval, an equation 4 of a distance between any point on the display and a surface of the oval control 804. The equation 4 is an analytical expression of a primitive SDF corresponding to the circular control 801.

Optionally, the electronic device 100 may further express the circular control 801, the rectangular control 802, the triangular control 803, and the oval control 804 shown in FIG. 8 by using the Bezier curve analysis formula. It may be understood that the circular control 801, the rectangular control 802, the triangular control 803, and the oval control 804 respectively correspond to different Bezier curve analysis formulas. After the electronic device 100 expresses the circular control 801, the rectangular control 802, the triangular control 803, and the oval control 804 shown in FIG. 8 by using the Bezier curve analysis formula, the controls such as the circular control 801, the rectangular control 802, the triangular control 803, and the oval control 804 may achieve an effect of a scalable vector graphic.

Optionally, as shown in FIG. 8, the electronic device 100 may further express the primitive SDFs corresponding to the circular control 801, the rectangular control 802, the triangular control 803, and the oval control 804 as discrete texture images. For example, the primitive SDF corresponding to the circular control 801 may be expressed as a texture image 805. The primitive SDF corresponding to the rectangular control 802 may be expressed as a texture image 806. The primitive SDF corresponding to the triangular control 803 may be expressed as a texture image 807. The primitive SDF corresponding to the oval control 804 may be expressed as a texture image 808.

The texture image 805, the texture image 806, the texture image 807, and the texture image 808 include an original primitive and texture lines outside and inside the original primitive. Distances between a plurality of points on each circle of texture lines and a surface of the original primitive are equal.

Optionally, the electronic device 100 may further express the primitive SDF by using a neural network. For example, as shown in FIG. 8, a primitive SDF corresponding to a texture image 809 may be further expressed as a neural network 810. It may be understood that the neural network 810 shown in FIG. 8 is merely an example. A specific structure of the neural network 810 is not limited in this embodiment of this application.

The following uses the circular control as an example to describe in detail a plurality of expression manners of the primitive SDF corresponding to the circular control. For geometric expressions of the rectangle, the triangle, the oval, and the like, refer to descriptions in related textbooks. Details are not described herein again.

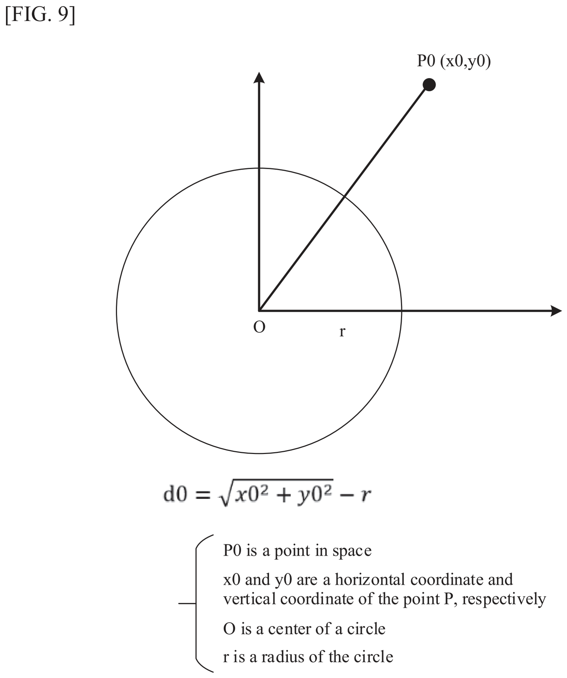

As shown in FIG. 9, a distance between any point P0 (x0,y0) in space and the circle is d0. A radius of the circle is r, and a center O of the circle is used as a coordinate origin. A relationship between d0 and x0, y0, and r may be shown in formula 1:

$$d0 = \sqrt{x0^2 + y0^2} - r \text{ (formula 1)}$$

The electronic device 100 may express the primitive SDF of the circular control as the equation shown in the foregoing formula 1. In a possible implementation, a solution process of the formula 1 may be completed during running, and specific calculation may be performed by using the shader (shader) in the GPU in the electronic device 100.

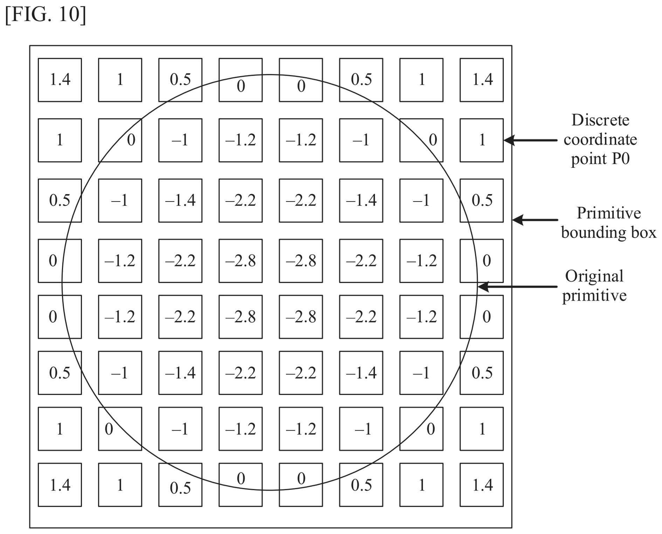

The primitive SDF of the circular primitive shown in FIG. 9 may be further expressed through discretization. As shown in FIG. 10, the original primitive of the circle is covered by a primitive bounding box. The primitive bounding box is evenly divided into 8 x 8 small rectangles, and center points of these small rectangles represent 8 x 8 fixed coordinates in the circular coordinate system, with the circle center as the coordinate origin. The electronic device 100 may calculate, by using the primitive SDF analysis formula shown in the formula 1, a shortest distance between the 8 x 8 fixed coordinates and a circular surface. The electronic device 100 may store the calculated distance as a pixel value corresponding to the texture image. For the texture image, refer to the texture image 805 shown in FIG. 8. A shortest distance between a point outside the original primitive to the surface of the original primitive is a positive value. A shortest distance between a point inside the original primitive and the surface of the original primitive is a negative value. A shortest distance between a point on the surface of the original primitive and the surface of the original primitive is 0. For example, a discrete coordinate point P0 shown in FIG. 10 is outside the original primitive, and a shortest distance between the discrete coordinate point P0 and the original primitive is 1. In this embodiment of this application, a unit of the shortest distance may be a pixel.

The electronic device 100 may generate the texture image 805 shown in FIG. 8 based on a pixel value corresponding to the texture image, namely, the shortest distance shown in FIG. 10 between the 8*8 fixed coordinates and the circular surface. Optionally, the texture image stored in the electronic device 100 may include 8*8 pixels, and distances between center points of the 8*8 rectangles in FIG. 10 and the surface of the original primitive are respectively stored in the 8*8 pixels.

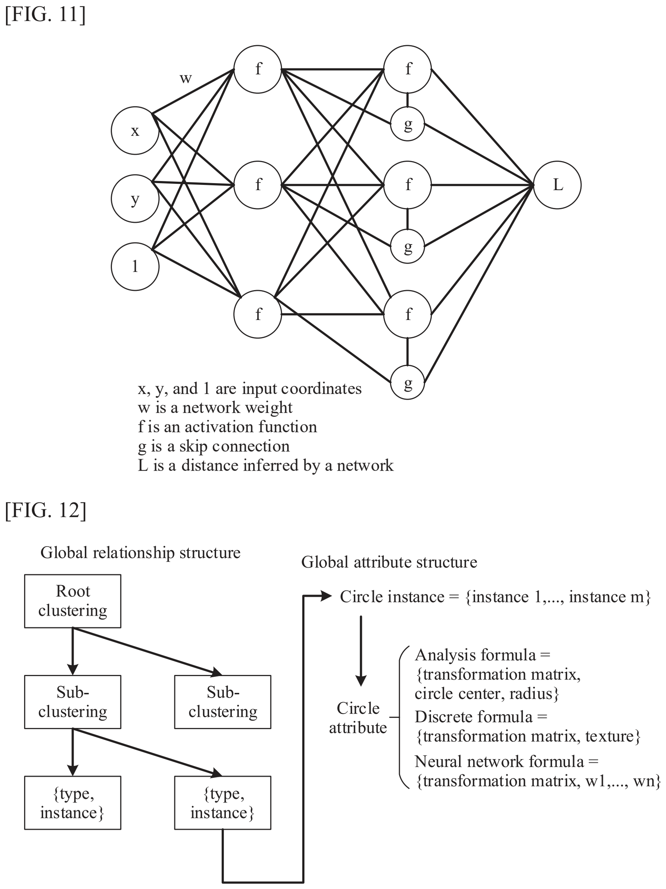

For example, the primitive SDF corresponding to the circle primitive may be further expressed as a neural network shown in FIG. 11. As shown in FIG. 11, in the neural network expression corresponding to the primitive SDF, an input of the neural network may be x, y, and 1. Herein, x and y may be a horizontal coordinate and a vertical coordinate of any point on the display, respectively. A network weight of the neural network is w, an activation function is f, and a jump connection is g. After x, y, and 1 are input into the neural network, the neural network may output a shortest distance L between the coordinate point (x,y) and the surface of the original primitive.

It may be understood that specific values of the network weight w, the activation function f, and the jump connection g in the neural network shown in FIG. 11 are not limited in this embodiment of this application. A specific structure of the neural network shown in FIG. 11 is not limited in this embodiment of this application.

S703: The electronic device 100 constructs the N primitive SDFs into a global acceleration structure.

The original primitives in the N primitive SDFs may include a plurality of primitive shape types, for example, a circle, a rectangle, a triangle, and an oval. There are a plurality of instances in each primitive shape type, for example, 10 circles and 10 rectangles. In other words, the N primitive SDFs may include a plurality of circular primitive SDFs and a plurality of rectangular primitive SDFs. This is not limited in this embodiment of this application. However, a large amount of repeated data may exist if the N primitives are processed separately. In this case, when the GPU draws the first image frame, it is not conducive for the GPU to transmit and read the drawing data

The electronic device 100 may construct a full-scenario-oriented storage structure, to store the N primitive SDFs. The storage structure may be referred to as a global acceleration structure. A name of the storage structure is not limited in this embodiment of this application.

FIG. 12 shows an example of a global acceleration structure of a primitive SDF. As shown in FIG. 12, the global acceleration structure may be divided into two parts: a global relationship structure and a global attribute structure. The global relationship structure is clustering of primitive instances in the N primitive SDFs, and the N primitive SDFs are organized together according to a specific clustering rule. Clustering may form a tree structure (or referred to as a hierarchical structure) according to different granularities. In other words, clustering may include several sub-clustering. The clustering rule may include but is not limited to scenario space division based on a grid (grid) or a K-dimensional tree (K-dimensional tree, kd-tree), a screen space division based on a grid tile, and the like.

The global attribute structure is an actual storage format of primitive SDF data. All primitive SDFs of a same type share a same attribute structure. For example, as shown in FIG. 12, a circular primitive SDF (which may also be referred to as a circular instance) is used as an example. All circles have two attributes: a circle center and a radius. A difference lies in that specific values of the center and the radius in different circles are different. Primitive SDFs of a same type are stored in consecutive storage space, so that efficient retrieval is performed when the GPU draws the primitive SDFs. Because the primitive SDF has three expression manners, the global attribute structure also has three expression manners. For a primitive SDF in an analytical expression, an attribute of the primitive SDF may include a group of parameters. For example, an attribute of the circular primitive SDF may include a circle center, a radius, and the like. For a primitive SDF in a discrete expression, an attribute of the primitive SDF may include a distance field texture, for example, the texture image 805 shown in FIG. 5. For the primitive SDF in the neural network expression, an attribute of the primitive SDF may include network weights (for example, $w1,..., wn$). Optionally, in the primitive SDF in the analytical expression, the primitive SDF in the discrete expression, and the primitive SDF in the neural network expression, attributes of the three types of primitive SDFs in different expression manners may further include a transformation matrix. The transformation matrix may be used to describe spatial transformation attributes such as translation, rotation, and scaling of the primitive SDF.

It may be understood that the electronic device 100 may store the N primitive SDFs based on an attribute structure corresponding to any one of the three expression manners: the primitive SDF in the analytical expression, the primitive SDF in the discrete expression, and the primitive SDF in the neural network expression.

S704: The electronic device 100 draws the N primitive SDFs in the global acceleration structure through a line-of-sight tracking algorithm.

The electronic device 100 may determine two types of visibility determining of the N primitive SDFs through calculation of the line-of-sight tracking algorithm. The two types of visibility determining may include screen visibility determining and spatial visibility determining. The screen visibility determining may be used to determine a primitive that can be seen by each pixel on the screen. The spatial visibility determining may be used to determine whether there is an object blocking between any two points in space.

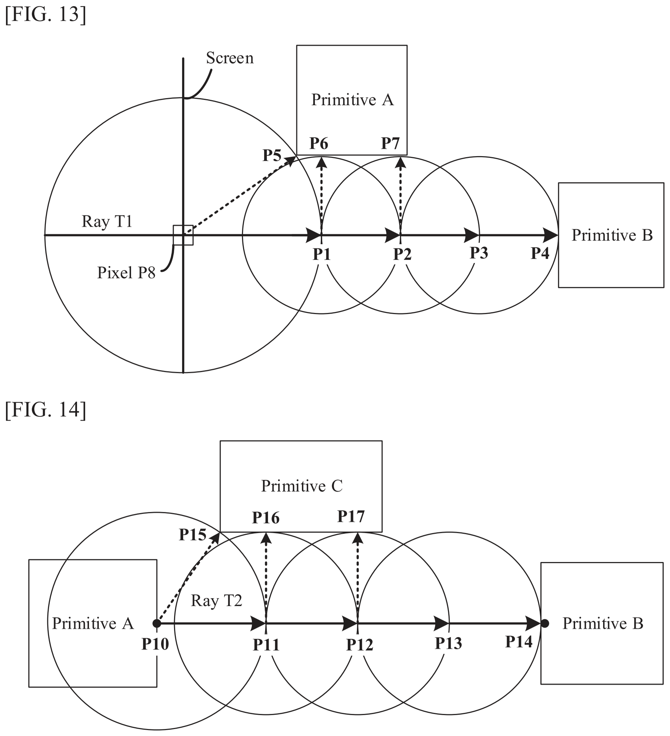

FIG. 13 is an example of a diagram of screen visibility determining. As shown in FIG. 13, a pixel P8 is any pixel on the screen. The electronic device usually draws a graphical interface based on orthogonal projection. The electronic device 100 constructs a ray T1 by using the pixel P8 as a start point, and a direction of the ray T1 is perpendicular to the screen. Then, the electronic device 100 may traverse global attribute structures of the N primitive SDFs in the global acceleration structure, and calculate shortest distances between the pixel P8 and the primitive A and between the pixel P8 and the primitive B as (P8, P5) and (P8, P4), respectively. Among all distances, (P8, P5) is the shortest. In other words, there is no obstacle in the distance (P8, P5). Therefore, the electronic device 100 may move the ray T1 forward by (P8, P5), to reach a point P1. A distance between the point P1 and the nearest primitive, that is, the primitive A, is (P1, P6). There is no obstacle in the distance (P1, P6). The electronic device 100 may move the ray T 1 forward by a distance (P1, P6) to reach a point P2. A distance between the point P2 and the nearest primitive, that is, the primitive A, is (P2, P7). There is no obstacle in the distance (P2, P7). The electronic device 100 may move the ray T1 forward by a distance (P2, P7) to reach a point P3. A distance between the point P3 and the nearest primitive, that is, the primitive B, is (P3, P4). There is no obstacle in the distance (P3, P4). The electronic device 100 may move the ray T1 forward by a distance (P3, P4) to reach a point P4. A distance between the point P4 and the primitive B is 0. The electronic device 100 may determine that the ray T1 hits the primitive B. Therefore, the electronic device 100 may determine that a primitive visible to the pixel P8 is the primitive B.

It may be understood that the N primitive SDFs may include the primitive SDF of the primitive A and the primitive SDF of the primitive B.

In this way, the electronic device 100 may determine, according to a screen visibility determining step shown in FIG. 13, a primitive visible to each pixel on the screen of the electronic device 100. For example, if the primitive visible to the pixel P8 is the primitive B, the electronic device 100 may draw the primitive B at the pixel P8.

In a possible implementation, after the electronic device 100 may determine, according to the screen visibility determining step shown in FIG. 13, that the primitive visible to the pixel P8 on the screen of the electronic device 100 is the primitive B, the electronic device 100 further needs to determine whether there is an obstacle between the primitive A and the primitive B. When there is no obstacle, the electronic device 100 may draw the primitive B at the pixel P8. When there is an obstacle, the electronic device 100 may determine that the pixel P8 is visible to the obstacle.

It may be understood that, when the electronic device 100 performs screen visibility determining and spatial visibility determining, the electronic device 100 may access, according to the global acceleration structure, the primitive SDFs corresponding to the N primitives. For example, the electronic device 100 obtains the global acceleration structure of the N primitive SDFs through clustering based on screen space division of a grid tile. When performing screen visibility determining or spatial visibility determining, the electronic device 100 may access the primitive SDF corresponding to the primitive. If a primitive corresponding to root clustering does not block a primitive 1, a primitive corresponding to sub-clustering (which may also be referred to as a sub-node) of the root clustering does not block the primitive 1. In this case, the electronic device 100 may not need to access and calculate whether the primitive corresponding to the sub-clustering of the root clustering blocks the primitive 1. By using the global acceleration structure, a calculation amount of the electronic device can be reduced.

FIG. 14 is an example of a diagram of spatial visibility determining. As shown in FIG. 14, a point P10 is a location point on a surface of the primitive A. A point P14 is a location point on a surface of the primitive B. The electronic device 100 constructs a ray T2 by using the point P10 as a start point and the point P14 as an end point. Then, the electronic device 100 may traverse global attribute structures of the N primitive SDFs in the global acceleration structure, and calculate the shortest distances between the point P10 and the primitive C and between the point P10 and the primitive B as (P10, P15) and (P10, P14), respectively. In all distances, the (P10, P15) distance is the shortest. In other words, it indicates that there is no obstacle in the (P10, P15) distance. Therefore, the electronic device 100 may move the ray T2 forward by (P10, P15), to reach a point P11. A distance between the point P11 and the nearest primitive, that is, the primitive C, is (P11, P16). There is no obstacle in the distance (P11, P16). The electronic device 100 may move the ray T2 forward by a distance (P11, P16) to reach a point P12. A distance between the point P12 and the nearest primitive, that is, the primitive C, is (P12, P17). There is no obstacle in the distance (P12, P17). The electronic device 100 may move the ray T2 forward by a distance (P12, P17) to reach a point P13. A distance between the point P13 and the nearest primitive, that is, the primitive B, is (P13, P14). There is no obstacle in the distance (P13, P14). The electronic device 100 may move the ray T2 forward by a distance (P13, P14) to reach a point P14. A distance between the point P14 and the primitive B is 0. The electronic device 100 may determine that the ray T2 hits the primitive B. Because no other primitive is found between the point P10 and the point P14 by the ray T2, the electronic device 100 may determine that the point P10 and the point P14 are visible.

Then, based on a screen visibility determining result and a spatial visibility determining result, the electronic device 100 may draw the N primitive SDFs, that is, draw original primitives corresponding to the N primitive SDFs. Because the electronic device 100 has determined a spatial relationship between the N primitives based on the screen visibility determining and the spatial visibility determining, the electronic device 100 may draw all the primitives by invoking the drawcall instruction once.

S705: The electronic device 100 draws an animation effect of the N primitive SDFs.

The electronic device 100 may read, from the drawing data, whether the N primitives have an animation effect. If an $i^{th}$ primitive in the N primitive SDFs has an animation effect, the electronic device 100 may perform animation effect calculation on the $i^{th}$ primitive. Then, the electronic device 100 may draw all the primitives and animation effects of the primitives by invoking the drawcall instruction once.

Optionally, in a possible implementation, the N primitives may include the primitive A, the primitive A has a shadow effect, and the electronic device 100 needs to calculate the shadow effect of the primitive A. In other words, the electronic device 100 needs to determine whether a color of a pixel in space is affected by the shadow effect of the primitive A.

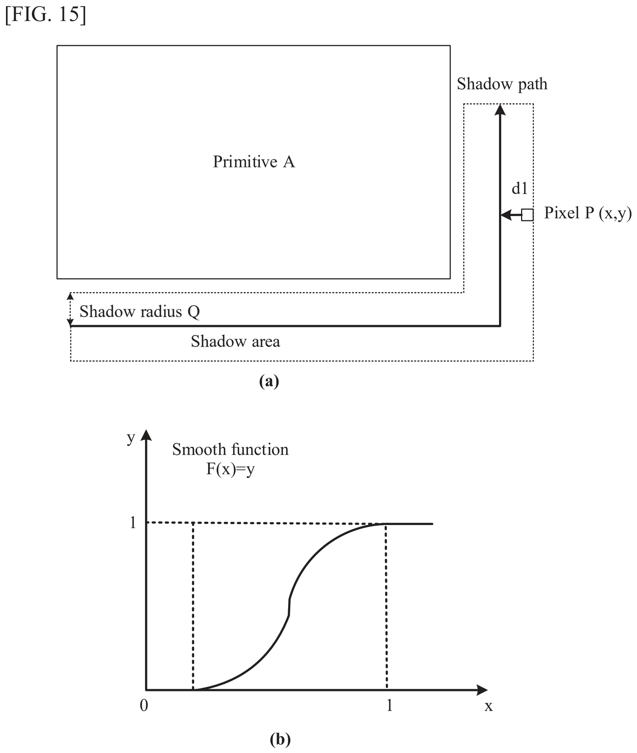

FIG. 15 is an example of a diagram of calculating the shadow effect of the primitive A by the electronic device 100. As shown in FIG. 15, the primitive A has a shadow animation effect, and a pixel P (x, y) exists in space. The electronic device 100 needs to determine whether the shadow effect of the primitive A is reflected on the pixel P. First, the electronic device 100 needs to determine a location relationship between the pixel P and the primitive A. There are two location relationships between the pixel P and the primitive A: In a first type, the pixel P is located inside the primitive A; and in a second type, the pixel P is located outside the primitive A. After determining a screen visibility determining result of the pixel P through the line-of-sight tracking algorithm, the electronic device 100 may determine that the pixel P is located outside the primitive A. Then, the electronic device 100 needs to further determine whether the pixel P has a shadow. The electronic device 100 may perform shadow calculation to determine a shadow path and a shadow radius Q of the shadow. As shown in FIG. 15, the shadow path may be a solid line with a single arrow shown in (a) in FIG. 15. The shadow radius Q may be a dashed line with double arrows shown in (a) in FIG. 15. To determine a shadow effect of the pixel P, the electronic device 100 may use the shadow path as a primitive, and construct a primitive SDF for the shadow path. Then, the electronic device 100 may calculate a shortest distance d1 between the pixel P and the shadow path. The electronic device 100 may determine, based on a relationship between the shortest distance d1 and the shadow radius Q, whether the pixel has the shadow effect. Specifically, when the shortest distance d1 is greater than the shadow radius Q, the electronic device 100 may determine that a shadow density of the pixel P is 0, that is, the pixel P has no shadow effect. When the shortest distance d1 is less than or equal to the shadow radius Q, the electronic device 100 may determine that the pixel P is located in a shadow region. In this case, the electronic device 100 needs to further determine the shadow density of the pixel P.

In a possible implementation, the electronic device 100 may calculate the shadow density of the pixel P by using a distance attenuation method. As shown in (b) in FIG. 15, y represents a shadow density value, and a value range of y is greater than or equal to 0 and less than or equal to 1. When y = 0, it indicates that the shadow density is maximum. When y = 1, it indicates that the shadow density is minimum. An intermediate value between 0 and 1 forms a smooth transition between light and dark. An independent variable x is a ratio of the shortest distance d1 to the shadow radius Q. Because the shortest distance d1 is less than or equal to the shadow radius Q, a value range of the independent variable x is greater than or equal to 0 and less than or equal to 1. The electronic device 100 may substitute a ratio of the shortest distance d1 to the shadow radius Q into the function F(x) = y, and may determine a value of y. Then, the electronic device 100 may multiply an original primitive color at the pixel P by y, to darken the original primitive color, to obtain a final color value of the pixel P.

Optionally, in a possible implementation, the N graphics may include a primitive D, and the primitive D has a Fresnel refraction effect and a reflection effect. The electronic device 100 needs to calculate the Fresnel refraction effect and the reflection effect of the primitive D. In other words, the electronic device 100 needs to determine whether a color of a pixel in space is affected by the Fresnel refraction effect and the reflection effect of the primitive D.

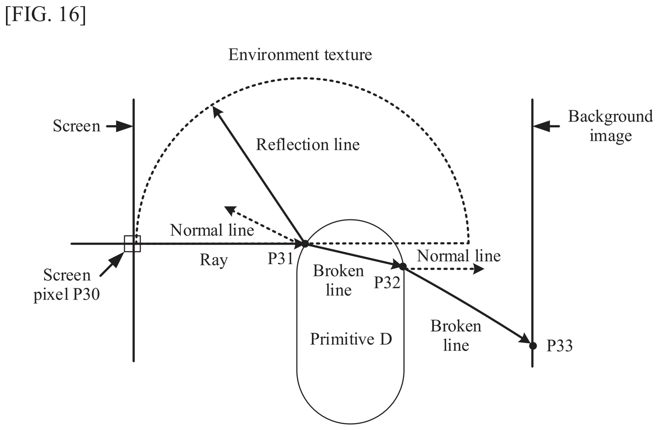

FIG. 16 is an example of a diagram of calculating the Fresnel refraction effect and the reflection effect of the primitive D by the electronic device 100. As shown in FIG. 16, the primitive D has the Fresnel refraction effect and the reflection effect. There is a screen pixel P30 on the screen of the electronic device 100. The electronic device 100 may emit a ray from the pixel P30, and may determine, through line-of-sight tracking, that the ray can reach a point P31 on a surface of the primitive D. The electronic device 100 may determine a reflection direction of the ray at the point P31 based on a Fresnel formula. After determining the reflection direction, the electronic device may query an environment texture based on the reflection direction, to obtain a color value 1 of an environment. The environment texture is a panorama, and a 3D environment may be stored in a 2D image. The electronic device 100 may determine a color value of any 2D reflection direction based on the environment texture.

As shown in FIG. 16, the electronic device 100 may further calculate, based on the Fresnel formula and a discovery, a refraction direction of the ray at the point P31. Then, the electronic device 100 may continue to move the ray along the refraction direction, and the ray may reach a point P32 on an inner surface of the primitive D. The ray may be refracted to an outside of the primitive D at the point P32, and reach a point on a background image, namely, a point P33. The electronic device 100 may extract a color value 2 of the point P33 from the background image as a refraction color. The background image is a conventional two-dimensional image, and content of the background image may be an art material, a photographed photo, or the like. This is not limited in this embodiment of this application. For example, the background image may be a background control 304 shown in FIG. 3B. An image specifically corresponding to the background control 304 is the image shown in ① or ② in FIG. 3A.

Based on the foregoing reflection calculation and refraction calculation, a final color value 3 of the point P30 = a color value 1 * u1 + v1 + a color value 2 * u2 + v2. "*"represents a multiplication sign, and u1, u2, v1, and v2 are linear parameters, and are used to attenuate, amplify, or offset a color. Finally, the electronic device 100 may determine that the color value of the pixel P30 is the color value 3.

S706: The electronic device 100 displays the first image frame.

After the electronic device 100 draws all the primitives and animation effects of the primitives by invoking the drawcall instruction once, a drawing result is obtained. The electronic device 100 may send and display the drawing result, and display the first image frame.

In a possible implementation, before the electronic device 100 performs step S702, the electronic device 100 may first determine a primitive with an animation effect and a primitive without an animation effect in the N primitives described in the drawing data. For the primitive without the animation effect, the electronic device 100 may draw the primitive without the animation effect based on a conventional rasterization drawing process. For the primitive with the animation effect, the electronic device 100 may draw the primitive with the animation effect according to step S702 to step S705. Then, the electronic device 100 may combine a drawing result drawn based on a conventional rasterization drawing process and the drawing result drawn according to step S702 to step S705, to obtain the first image frame, and the electronic device may display the first image frame. For example, after the electronic device 100 determines that an $i^{th}$ primitive has an animation effect, the electronic device 100 may construct the $i^{th}$ primitive into a primitive SDF, construct a global acceleration structure, and calculate an animation effect of the primitive SDF. Finally, the electronic device 100 may draw the $i^{th}$ primitive. After the electronic device 100 determines that a $j^{th}$ primitive does not have an animation effect, the electronic device 100 may represent the $j^{th}$ primitive by using a triangle, and then perform vertex calculation, rasterization, pixel coloring, and the like, to obtain a drawing result of the $j^{th}$ primitive.

In a possible implementation, for a primitive without an animation effect, the electronic device 100 may draw the primitive without the animation effect by using the basic animation pipeline shown in FIG. 5. The basic animation pipeline may draw the primitive without the animation effect based on a conventional rasterization drawing process. For a primitive with an animation effect, the electronic device 100 may construct the primitive with the animation effect into a primitive SDF by using the primitive processing module shown in FIG. 5. Then, the electronic device 100 draws the primitive with the animation effect by using the high-order animation pipeline shown in FIG. 5. Finally, the electronic device 100 may fuse a drawing result of the basic animation pipeline and a drawing result of the high-order animation pipeline by using the fusion module shown in FIG. 5, and send a fused drawing result to a layer composition display module. The layer composition display module sends and displays the fused drawing result, namely, the first image frame, to the display screen 503.

It may be understood that, in this embodiment of this application, the screen may also be referred to as a display, a display screen, a touchscreen, a touch screen, or the like. This is not limited in this embodiment of this application.

According to the graphics drawing method provided in this embodiment of this application, the electronic device 100 may construct a primitive SDF, store the primitive SDF by using the global acceleration structure, and determine screen visibility and spatial visibility of a pixel on the screen according to a line-of-sight tracking method. In this way, a finally visible primitive in the pixel can be determined. In addition, an animation effect of the primitive may be further calculated through line-of-sight tracking, and a color value of the pixel is finally determined. Finally, the electronic device 100 may invoke the drawcall instruction once based on the foregoing calculation result to draw the first image frame. In this way, a drawing effect of the electronic device 100 can be improved, and power consumption of the electronic device can be reduced.

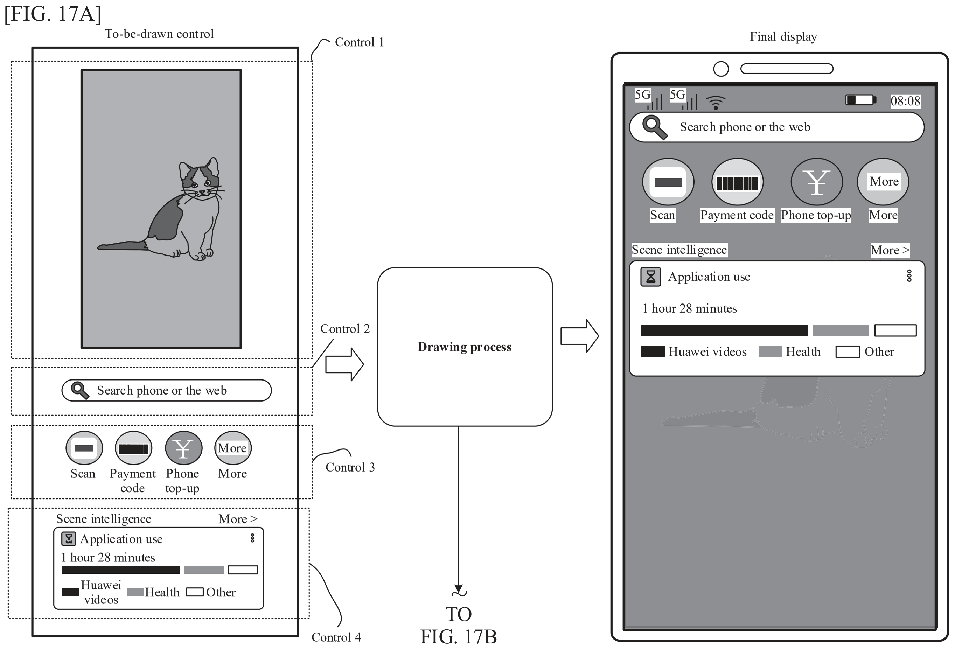

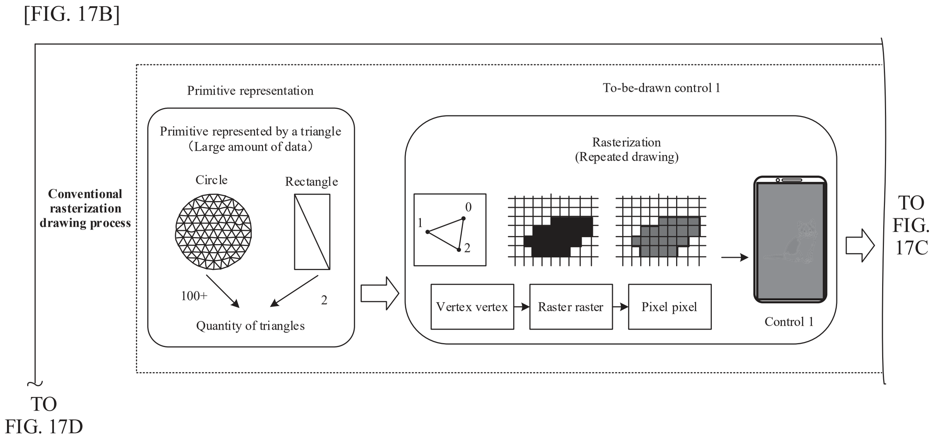

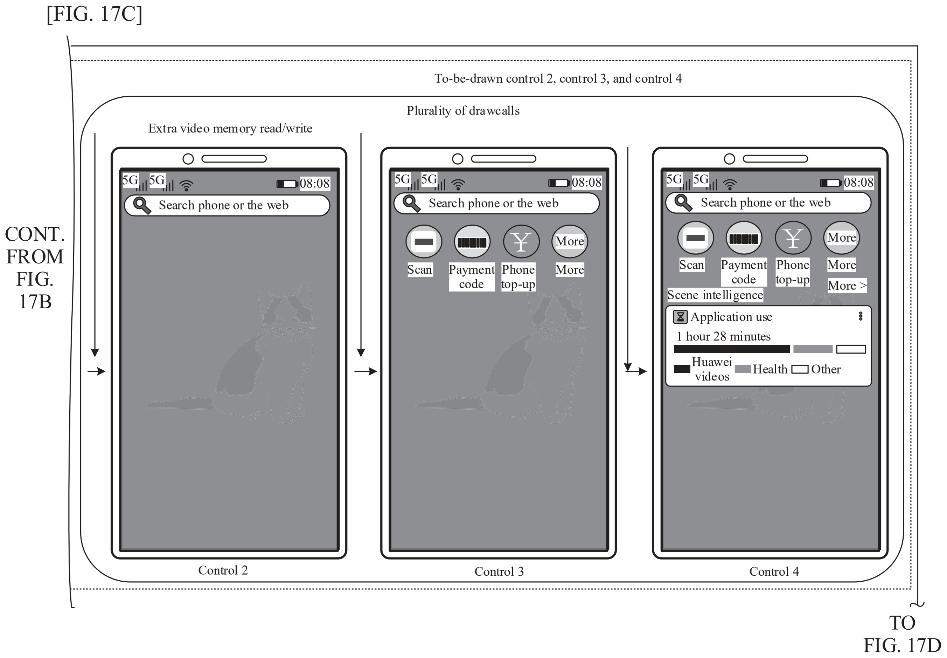

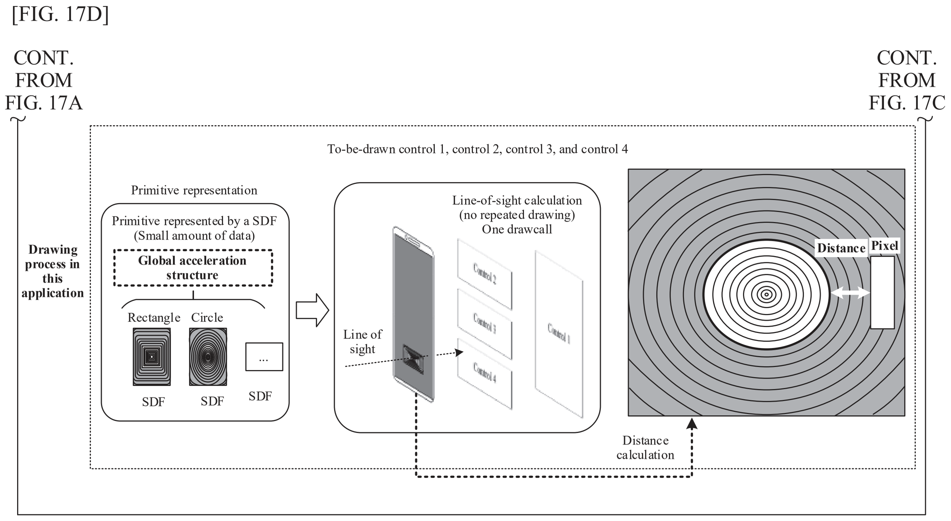

For example, as shown in FIG. 17A, FIG. 17B, FIG. 17C and FIG. 17D, for a same to-be-drawn control, the electronic device 100 needs to use a triangle to represent a primitive based on the conventional rasterization drawing process. Then, the electronic device 100 needs to: perform vertex calculation, rasterization, pixel coloring, and the like on each control, and invoke the drawcall instruction a plurality of times, and needs to additionally perform video memory read/write to draw a finally displayed user interface.

As shown in FIG. 17A, FIG. 17B, FIG. 17C and FIG. 17D, the electronic device 100 draws the same to-be-drawn control by using the graphics drawing method provided in this embodiment of this application, and separately constructs a control 1, a control 2, a control 3, and a control 4 of the to-be-drawn control into primitive SDFs. Then, the electronic device may store the plurality of constructed primitive SDFs as a global acceleration structure. The electronic device may finally determine, through line-of-sight calculation, a primitive and a color value that are visible to each pixel on the screen in the electronic device 100. Then, the electronic device 100 may draw, by using one drawcall, a finally displayed user interface.

As shown in FIG. 17A, FIG. 17B, FIG. 17C and FIG. 17D, according to the graphics drawing method provided in this embodiment of this application, the electronic device 100 needs to invoke the drawcall instruction only once to draw the user interface, and does not need to perform video memory read/write additionally. In this way, a drawing effect of the electronic device 100 can be improved, and power consumption of the electronic device can be reduced.

In this embodiment of this application, the first image frame may be an image frame finally displayed by the electronic device shown in FIG. 17A, FIG. 17B, FIG. 17C and FIG. 17D. N controls may include the control 1, the control 2, the control 3, and the control 4 shown in FIG. 17A, FIG. 17B, FIG. 17C and FIG. 17D. A first control may be the control 1. A first ray may be a ray T1, and a first pixel may be the pixel P8. One or more controls may include controls corresponding to the primitive A and the primitive B. A second control may be a control corresponding to the primitive B. A second ray may be a ray T2. A first point may be the point P10, and a second point may be the point P14. A third control may be a control corresponding to the primitive A. A fourth control may be a control corresponding to the primitive B. A fifth control may be a control corresponding to the primitive C. A sixth control may be a control corresponding to the primitive A in FIG. 15. A second pixel may be the pixel P shown in FIG. 15. A seventh control may be a control corresponding to the primitive D in FIG. 16. A third pixel may be the screen pixel P30. A third point may be the point P31, and a fourth point may be the point P33.

The following first describes an example electronic device 1000 according to an embodiment of this application.

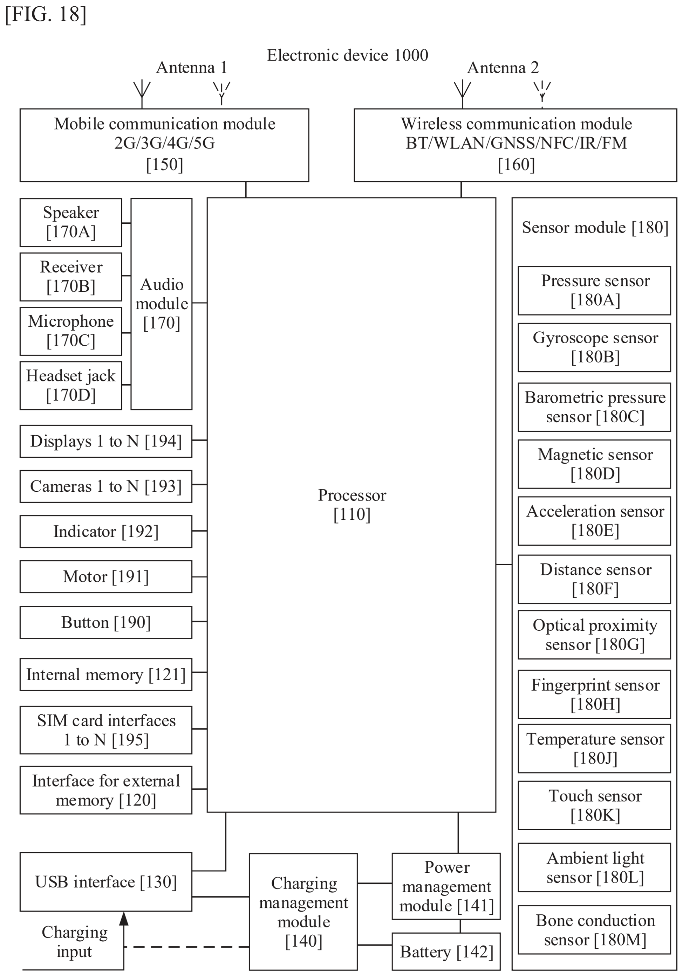

FIG. 18 is a diagram of a structure of an electronic device 1000 according to an embodiment of this application.

The following uses the electronic device 1000 as an example to specifically describe this embodiment. It should be understood that the electronic device 1000 may have more or fewer components than those shown in the figure, or may combine two or more components, or may have different component configurations. Various components shown in the figure may be implemented in hardware that includes one or more signal processing and/or application-specific integrated circuits, software, or a combination of hardware and software.

The electronic device 1000 may include: a processor 110, an interface for external memory 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 1000. In some other embodiments of this application, the electronic device 1000 may include more or fewer components than those shown in the figure, or some components may be combined, or some components may be split, or there may be a different component arrangement. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 1000. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of 12C buses. The processor 110 may be separately coupled to the touch sensor 180K, a charger, a flash, the camera 193, and the like through different I2C bus interfaces.

The I2S interface may be configured to perform audio communication.

The PCM interface may also be used to perform audio communication, and sample, quantize, and code an analog signal.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component, for example, the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 1000. The processor 110 communicates with the display 194 through the DSI interface, to implement a display function of the electronic device 1000.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The SIM interface may be configured to communicate with the SIM card interface 195, to implement a function of transmitting data to a SIM card or reading data in a SIM card.

The USB interface 130 is an interface that conforms to a USB standard specification, and may be specifically a mini USB interface, a micro USB interface, a USB type-C interface, or the like. The USB interface 130 may be configured to connect to a charger for charging the electronic device 1000, may be configured to transmit data between the electronic device 1000 and a peripheral device, or may be configured to connect to a headset for playing audio through the headset. The interface may be further configured to connect to another electronic device, for example, an AR device.

It may be understood that an interface connection relationship between the modules shown in this embodiment of the present invention is merely used as an example for description, and does not constitute a limitation on the structure of the electronic device 1000. In some other embodiments of this application, the electronic device 1000 may alternatively use an interface connection manner different from that in the foregoing embodiment, or use a combination of a plurality of interface connection manners.

The charging management module 140 is configured to receive a charging input from a charger. The charger may be a wireless charger or a wired charger.

The power management module 141 is configured to connect to the battery 142, the charging management module 140, and the processor 110. The power management module 141 receives input of the battery 142 and/or the charging management module 140, to supply power to the processor 110, the internal memory 121, an external memory, the display 194, the camera 193, the wireless communication module 160, and the like.

A wireless communication function of the electronic device 1000 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 1000 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 can provide a solution, applied to the electronic device 1000, to wireless communication including 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, and the like), and displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 1000. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 1000, the antenna 1 is coupled to the mobile communication module 150, and the antenna 2 is coupled to the wireless communication module 160, so that the electronic device 1000 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 1000 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), and the like. In some embodiments, the electronic device 1000 may include one or N displays 194, where N is a positive integer greater than 1.

The electronic device 1000 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and color of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through a lens, and is projected to a photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 1000 may include one or N cameras 193, where N is a positive integer greater than 1.

The digital signal processor is configured to process a digital signal, and may process another digital signal in addition to the digital image signal.

The video codec is configured to compress or decompress a digital video. The electronic device 1000 may support one or more video codecs. Therefore, the electronic device 1000 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transfer between human brain neurons, and may further continuously perform self-learning. The electronic device 1000 may implement applications such as intelligent cognition through the NPU, for example, image recognition, facial recognition, speech recognition, and text understanding.

The interface for external memory 120 may be configured to connect to an external memory card, for example, a micro SD card, to extend a storage capability of the electronic device 1000. The external memory card communicates with the processor 110 through the interface for external memory 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 1000 and data processing. The internal memory 121 may include a program storage area and a data storage area. The program storage area may store an operating system and an application required by at least one function (for example, a facial recognition function, a fingerprint recognition function, and a mobile payment function). The data storage area may store data (for example, facial information template data and a fingerprint information template) created during use of the electronic device 1000. In addition, the internal memory 121 may include a high-speed random access memory, or may include a nonvolatile memory, for example, at least one magnetic disk storage device, a flash memory, or a universal flash storage (universal flash storage, UFS).

The electronic device 1000 may implement an audio function, for example, music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 1000 may listen to music or answer a hands-free call through the speaker 170A.

The receiver 170B, also referred to as an "earpiece", is configured to convert an audio electrical signal into a sound signal. When the electronic device 1000 answers a call or listens to a voice message, the receiver 170B may be placed near a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 1000. In some other embodiments, two microphones 170C may be disposed in the electronic device 1000, to implement a noise reduction function in addition to a function of collecting a sound signal. In some other embodiments, three, four, or more microphones 170C may be alternatively disposed in the electronic device 1000, to collect a sound signal, implement noise reduction, and identify a sound source, to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal.

The gyroscope sensor 180B may be configured to determine a motion posture of the electronic device 1000.

The barometric pressure sensor 180C is configured to measure barometric pressure.

The magnetic sensor 180D includes a Hall sensor. The electronic device 1000 may detect opening and closing of a leather case by using the magnetic sensor 180D.

The acceleration sensor 180E may detect magnitude of accelerations in various directions (usually on three axes) of the electronic device 1000.

The distance sensor 180F is configured to measure a distance. The electronic device 1000 may measure a distance in an infrared manner or a laser manner.

The optical proximity sensor 180G may include, for example, a light-emitting diode (LED) and an optical detector, for example, a photodiode.

The ambient light sensor 180L is configured to sense ambient light brightness.

The fingerprint sensor 180H is configured to collect a fingerprint.

The temperature sensor 180J is configured to detect a temperature.

The touch sensor 180K is also referred to as a touch panel. The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may alternatively be disposed on a surface of the electronic device 1000 at a location different from that of the display 194.

The button 190 includes a power button, a volume button, and the like. The button 190 may be a mechanical button, or may be a touch button. The electronic device 1000 may receive a key input, and generate a key signal input related to a user setting and function control of the electronic device 1000.

The motor 191 may generate a vibration prompt.

The indicator 192 may be an indicator light, and may be configured to indicate a charging status and a power change, or may be configured to indicate a message, a missed call, a notification, and the like.

The SIM card interface 195 is configured to connect to a SIM card.

The electronic device 1000 may perform the steps performed by the electronic device 100, and implement the functions implemented by the electronic device 100. For details about the steps performed by the electronic device 100 and the functions implemented by the electronic device 100, refer to the foregoing descriptions. Details are not described herein again.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

According to the context, the term "when" used in the foregoing embodiments may be interpreted as a meaning of "if", "after", "in response to determining", or "in response to detecting". Similarly, according to the context, the phrase "when it is determined that..." or "if (a stated condition or event) is detected" may be interpreted as a meaning of "if it is determined that...", "in response to determining...", "when (a stated condition or event) is detected", or "in response to detecting (a stated condition or event)".

**Claims**

1.  A graphics drawing method, comprising:

    obtaining, by an electronic device, drawing data of a first image frame, wherein the first image frame is a to-be-drawn image frame in a target application, and the drawing data is used to describe N controls comprised in the first image frame and attributes of the N controls;
    constructing, by the electronic device, N corresponding primitive signed distance fields SDFs based on the N controls, wherein the N controls comprise a first control,
    the N primitive SDFs comprise a first primitive SDF corresponding to the first control, and the first primitive SDF is used to describe a location relationship between any point in space and the first control;
    determining, by the electronic device, an occlusion relationship between the N controls based on the N primitive SDFs through line-of-sight tracking;
    drawing, by the electronic device, the first image frame based on the occlusion relationship between the N controls; and
    displaying, by the electronic device, the first image frame.

2.  The method according to claim 1, wherein constructing, by the electronic device, the N corresponding primitive signed distance fields SDFs based on the N controls specifically comprises:
    constructing, by the electronic device, a distance equation from any point in the space to the first control according to a geometric analysis formula corresponding to a geometric shape of the first control, wherein the distance equation is the first primitive SDF.

3.  The method according to claim 1, wherein constructing, by the electronic device, the N corresponding primitive signed distance fields SDFs based on the N controls specifically comprises:

    constructing, by the electronic device, a primitive bounding box that encloses the first control, and dividing the primitive bounding box into k rectangles, wherein center points of the k rectangles represent k coordinate points that use a center of the first control as a coordinate origin;
    calculating, by the electronic device, distances between the k coordinate points and a surface of the first control, to obtain k distance values; and
    generating, by the electronic device, a texture image based on the k distance values, wherein the texture image is the first primitive SDF.

4.  The method according to claim 1, wherein constructing, by the electronic device, the N corresponding primitive signed distance fields SDFs based on the N controls specifically comprises:
    constructing, by the electronic device, a first neural network, wherein an input of the first neural network is coordinates of any point in the space, an output of the first neural network is a distance between any point in the space and a surface of the first control, and the first neural network is the first primitive SDF.

5.  The method according to any one of claims 1 to 4, wherein the method further comprises:

    clustering, by the electronic device, the N primitive SDFs according to a clustering rule, to obtain a global acceleration structure, wherein the global acceleration structure comprises attributes of the N primitive SDFs; and
    storing, by the electronic device, the global acceleration structure.

6.  The method according to claim 5, wherein the occlusion relationship comprises screen visibility; and determining, by the electronic device, the occlusion relationship between the N controls based on the N primitive SDFs through line-of-sight tracking specifically comprises:

    constructing, by the electronic device, a first ray by using a first pixel on a display of the electronic device as a start point, wherein a direction of the first ray is perpendicular to the display;
    querying, by the electronic device, the global acceleration structure, to determine that one or more controls exist in the direction of the first ray, wherein the N controls comprise the one or more controls;
    determining, by the electronic device based on a primitive SDF corresponding to the one or more controls, a shortest distance between the first pixel and the one or more controls; and
    determining, by the electronic device based on the shortest distance between the first pixel and the one or more controls, that a control visible to the first pixel is a second control in the one or more controls.

7. The method according to claim 5, wherein the occlusion relationship comprises spatial visibility; and determining, by the electronic device, the occlusion relationship between the N controls based on the N primitive SDFs through line-of-sight tracking specifically comprises:

constructing, by the electronic device, a second ray by using a first point on a third control as a start point and a second point on a fourth control as an end point, wherein the N controls comprise the third control and the fourth control;

querying, by the electronic device, the global acceleration structure, to determine that a fifth control exists in a direction of the second ray;

determining, by the electronic device based on a primitive SDF corresponding to the fifth control, a distance between the first point and the fifth control; and

moving, by the electronic device, the second ray based on the distance between the first point and the fifth control, until the electronic device moves the start point of the second ray to the second point, and determining, by the electronic device, that there is no obstacle between the third control and the fourth control.

8. The method according to claim 7, wherein after determining, by the electronic device, the occlusion relationship between the N controls based on the N primitive SDFs through line-of-sight tracking, the method further comprises: determining, by the electronic device from the drawing data, that a sixth control in the N controls has a shadow effect, and calculating, by the electronic device, the shadow effect.

9. The method according to claim 8, wherein calculating, by the electronic device, the shadow effect specifically comprises:

determining, by the electronic device, a shadow radius and a shadow path of the sixth control, and constructing a shadow SDF based on the shadow radius and the shadow path;

calculating, by the electronic device based on the shadow SDF, a shortest distance between a second pixel and a shadow of the sixth control;

determining, by the electronic device, a shadow density of the second pixel based on the shadow radius and the shortest distance between the second pixel and the shadow of the sixth control; and

determining, by the electronic device, a color value of the second pixel based on the shadow density.

10. The method according to claim 7, wherein after determining, by the electronic device, the occlusion relationship between the N controls based on the N primitive SDFs through line-of-sight tracking, the method further comprises: determining, by the electronic device from the drawing data, that a seventh control in the N controls has a refraction effect and a reflection effect, and calculating, by the electronic device, the refraction effect and the reflection effect.

11. The method according to claim 10, wherein calculating, by the electronic device, the refraction effect and the reflection effect specifically comprises:

constructing, by the electronic device, a third ray by using a third pixel as a start point, wherein the third pixel is a pixel on a display of the electronic device, and a direction of the third ray is perpendicular to the display;

determining, by the electronic device based on line-of-sight tracking, that the third ray reaches a third point of a surface of the seventh control;

determining, by the electronic device, a reflection direction and a refraction direction of the third ray at the third point;

querying, by the electronic device, an environment texture based on the reflection direction, and determining that a color value of an environment is a first color value; moving, by the electronic device, the third ray based on the refraction direction, wherein the third ray reaches a fourth point in a background image;

obtaining, by the electronic device, a second color value of the fourth point in the background image; and

determining, by the electronic device, a color value of the third pixel based on the first color value and the second color value.

12. An electronic device, comprising a display, one or more processors, and one or more memories, wherein the display, the one or more memories, and the one or more processors are coupled to each other, the one or more memories are configured to store computer program code, the computer program code comprises computer instructions, and when the one or more processors execute the computer instructions, the method according to any one of claims 1 to 11 is performed.

13. A chip system, wherein the chip system is used in an electronic device, the chip system comprises one or more processors, and the processor is configured to invoke computer instructions to perform the method according to any one of claims 1 to 11.

14. A computer-readable storage medium, comprising instructions, wherein when the instructions are run on an electronic device, the method according to any one of claims 1 to 11 is performed.

[FIG. 1A]

[FIG. 1B(a)]

(a) Charging animation effect

[FIG. 1B(b)]

(b) Blur

FIG. 1B(c)]

(c) Light and shadow

[FIG. 1B(d)]

10D

105

(d) 3D

[FIG. 2]

Planar window - conventional animation

Spatial window - high-level animation

(a) Primitive relationship in the
planar window is independent

(b) Primitives in the spatial
window are interdependent

[FIG. 3A]

Frame buffer
2048*3072

Off-screen buffer
2048*3072

Pass 1
1024*1536

Pass 2
512*1024

Pass 3
256*512

Pass 4
128*256

① ② ③ ④ ⑤ ⑥

Copy

Draw

Pass 5
128*256

Horizontal
blurring ⑦

Pass 6
128*256

Vertical
blurring ⑧

Draw

Pass 7
2048*3072

Frame buffer
2048*3072

⑨ ⑩

Draw

Copy

~
TO
FIG. 3B

[FIG. 3B]

Frame buffer
2048*3072

301
(Search)

302
(Common)

303
(Notification)

304
(Background)

CONT.
FROM
FIG. 3A
~

⑪

Superimpose

[FIG. 4A]

Frame buffer
2048*3072

Off-screen buffer
512*512

Pass 1
256*256

Pass 2
128*128

Pass 3
64*64

Horizontal
blurring

Pass 4
64*64

Vertical
blurring

Pass 5
64*64

402

401

403

① ② ③ ④ ⑤ ⑥ ⑦

Draw

Copy

TO
FIG. 4B

EP 4 733 917 A1

[FIG. 4B]

Pass 6
512*512

404

⑧

⑩

⑨

Superimpose

Copy

Draw

EP 4 733 917 A1

32

[FIG. 5]

Electronic device 100

Central processing unit CPU 501

Application 5011

Operating system 5012

Graphics library user-mode driver

System graphics library interface

Graphics library kernel-mode driver

Layer composition display module

Memory 502

Instruction stream

Rendering data

Display screen 503

Graphics processing unit GPU 504

Animation drawing pipeline

**Primitive processing module**

Basic animation pipeline

**High-order animation pipeline**

**Fusion module**

Cache

[FIG. 6]

| Application layer | Game application | Video application | ... |
|---|---|---|---|

**Framework layer**

Rendering system (rendering system)

| Unified rendering service | Separated rendering service |
|---|---|

**System library**

Graphics device interface

Graphics processing library

OpenGL

| 2D engine | 3D engine |
|---|---|

Compositor

Frame buffer

**Driver layer**

| Graphics processing unit driver (GPU driver) | Display controller driver (display controller driver) |
|---|---|

**Hardware layer**

Graphics processing unit (GPU)

Animation drawing pipeline

**Primitive processing module**

| Basic animation pipeline | **High-order animation pipeline** |
|---|---|

**Fusion module**

Display (display device)

[FIG. 7]

S701: Obtain drawing data of a first image frame, where the first image frame is a to-be-drawn image frame in a target application

↓

S702: Construct N primitive signed distance fields SDFs based on the drawing data

↓

S703: Construct the N primitive SDFs into a global acceleration structure

↓

S704: Draw the N primitive SDFs in the global acceleration structure according to a line-of-sight tracking algorithm

↓

S705: Draw an animation effect of the N primitive SDFs

↓

S706: Display the first image frame

[FIG. 8]

[FIG. 9]

P0 (x0,y0)

O

r

$$d0 = \sqrt{x0^2 + y0^2} - r$$

P0 is a point in space

x0 and y0 are a horizontal coordinate and vertical coordinate of the point P, respectively

O is a center of a circle

r is a radius of the circle

[FIG. 10]

[FIG. 11]

x, y, and 1 are input coordinates
w is a network weight
f is an activation function
g is a skip connection
L is a distance inferred by a network

[FIG. 12]

Global relationship structure

Global attribute structure

EP 4 733 917 A1

[FIG. 13]

[FIG. 14]

40

[FIG. 15]

**(a)**

**(b)**

[FIG. 16]

[FIG. 17A]

To-be-drawn control

Control 1

Control 2

**Drawing process**

Control 3

Scene intelligence          More >

⧖ Application use

1 hour 28 minutes

■ Huawei videos   ▨ Health   ▢ Other

Control 4

TO
FIG. 17B

Final display

5G   5G   📶                    ▭ 08:08

🔍   Search phone or the web

Scan   Payment code   Phone top-up   More

Scene intelligence                    More >

⧖ Application use                      ⋮

1 hour 28 minutes

■ Huawei videos   ▨ Health   ▢ Other

[FIG. 17B]

Conventional rasterization drawing process

Primitive representation

Primitive represented by a triangle
（Large amount of data）

Circle

Rectangle

100+ → Quantity of triangles ← 2

To-be-drawn control 1

Rasterization
(Repeated drawing)

1 0 2

Vertex vertex → Raster raster → Pixel pixel

Control 1

TO FIG. 17C

TO FIG. 17D

To-be-drawn control 2, control 3, and control 4

Plurality of drawcalls

Extra video memory read/write

CONT.
FROM
FIG.
17B

**Control 2**

5G 5G 📶 🔋08:08
🔍 Search phone or the web

**Control 3**

5G 5G 📶 🔋08:08
🔍 Search phone or the web

Scan · Payment code · Phone top-up · More

**Control 4**

5G 5G 📶 🔋08:08
🔍 Search phone or the web

Scan · Payment code · Phone top-up · More

More >

Scene intelligence

⧗ Application use

1 hour 28 minutes

■ Huawei videos · ▨ Health · ☐ Other

Control 2

Control 3

Control 4

EP 4 733 917 A1

[FIG. 17D]

CONT. FROM FIG. 17A

CONT. FROM FIG. 17C

Drawing process in this application

Primitive representation

Primitive represented by a SDF (Small amount of data)

Global acceleration structure

Rectangle    Circle

SDF    SDF    SDF

SDF

To-be-drawn control 1, control 2, control 3, and control 4

Line-of-sight calculation (no repeated drawing) One drawcall

Control 1

Control 2

Control 3

Control 4

Line of sight

Distance calculation

Distance   Pixel

[FIG. 18]

Electronic device 1000

Antenna 1          Antenna 2

| Mobile communication module 2G/3G/4G/5G [150] | Wireless communication module BT/WLAN/GNSS/NFC/IR/FM [160] |

Speaker [170A]

Receiver [170B]

Microphone [170C]

Headset jack [170D]

Audio module [170]

Displays 1 to N [194]

Cameras 1 to N [193]

Indicator [192]

Motor [191]

Button [190]

Internal memory [121]

SIM card interfaces 1 to N [195]

Interface for external memory [120]

Processor [110]

Sensor module [180]

Pressure sensor [180A]

Gyroscope sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

USB interface [130]

Charging input

Charging management module [140]

Power management module [141]

Battery [142]

## INTERNATIONAL SEARCH REPORT

| International application No. |
| --- |
| **PCT/CN2024/142232** |

| A. | CLASSIFICATION OF SUBJECT MATTER |
| --- | --- |

G06F 3/04845(2022.01)i

According to International Patent Classification (IPC) or to both national classification and IPC

| B. | FIELDS SEARCHED |
| --- | --- |

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNABS: CNTXT; VEN; USTXT; WOTXT; EPTXT; CNKI; 百度, BAIDU; IEEE: 符号距离场, 有向距离场, 光线追踪, 球体跟踪, 遮挡, 可见, 三维, SDF, Signed Distance Field, ray tracing, sphere tracing, occlusion, visible, 3D, three-dimensional

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 2021044788 A1 (TOSHIBA KK) 11 February 2021 (2021-02-11) description, paragraphs 27-186 | 1-5, 12-14 |
| X | CN 107452048 A (NETEASE (HANGZHOU) NETWORK CO., LTD.) 08 December 2017 (2017-12-08) description, paragraphs 16-112 | 1-5, 12-14 |
| A | CN 116338665 A (SHANGHAI BIREN INTELLIGENT TECHNOLOGY CO., LTD.) 27 June 2023 (2023-06-27) entire document | 1-14 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **21 March 2025** | **23 March 2025** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2024/142232** |

| Patent document cited in search report | | | Publication date (day/month/year) | Patent family member(s) | | | Publication date (day/month/year) |
| --- | --- | --- | --- | --- | --- | --- | --- |
| US | 2021044788 | A1 | 11 February 2021 | GB | 2586157 | A | 10 February 2021 |
| | | | | GB | 2586157 | B | 12 January 2022 |
| | | | | JP | 2021026759 | A | 22 February 2021 |
| | | | | JP | 7119023 | B2 | 16 August 2022 |
| | | | | US | 11394945 | B2 | 19 July 2022 |
| CN | 107452048 | A | 08 December 2017 | WO | 2017206325 | A1 | 07 December 2017 |
| | | | | US | 2020302683 | A1 | 24 September 2020 |
| | | | | US | 11024077 | B2 | 01 June 2021 |
| | | | | CN | 107452048 | B | 12 March 2019 |
| CN | 116338665 | A | 27 June 2023 | | None | | |

Form PCT/ISA/210 (patent family annex) (July 2022)

**EP 4 733 917 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311839884